# DEMANDE DE BREVET EUROPEEN

(11) **EP 1 104 903 A1**
(43) Date de publication de la demande: **06.06.2001**
(21) Numéro de dépôt: 00403272.8
(22) Date de dépôt: 23.11.2000
(51) Int. Cl.: G06F 17/30, H04L 12/24

(54) **Procédé d'accès selon divers protocoles à des objets d'un arbre représentatif d'au moins une ressource de système**

(30) Priorité: 26.11.1999 FR 9914880
(71) Demandeur: Evidian, 78340 Les Clayes sous Bois (FR)
(72) Inventeur: Brunet, Alain, 92100 Boulogne Billancourt (FR); Marin, Philippe, 78230 Le Pecq (FR); Grignac, Alain, 78150 Le Chesnay (FR)
(74) Mandataire: Denis, Hervé

(57) **Abrégé**

Le procédé comprend au moins un cycle comprenant les étapes de : faire une requête (87) désignant un objet cible (81) à accéder dans l'arbre 80 représentatif des ressources de système et ayant une portée d'un seul niveau sous l'objet cible, utiliser un attribut protocolaire d'accès de l'objet cible (81) indiquant son protocole d'accès (Pc) pour permettre l'accès à l'objet cible, et obtenir de la requête une réponse incluant au moins l'attribut de nommage de chaque objet (82, 83) contenu dans la portée de la requête et, si au moins un objet contenu dans la portée de la requête a un protocole d'accès différent de celui de l'objet cible, l'attribut protocolaire d'accès de cet objet.

## Description

### Domaine technique.

L'invention a pour objet un procédé d'accès selon divers protocoles à des objets d'un arbre représentatif d'au moins une ressource de système. Les objets dans l'arbre peuvent être distribués et/ou non distribués. L'invention a pour objet connexe le système incluant au moins la ressource ou l'ensemble des ressources et mettant en oeuvre le procédé de l'invention. Par conséquent, ce système peut s'étendre d'une simple ressource à un ensemble de ressources pouvant être réparties dans plusieurs systèmes différents ou non. Le système qui servira d'exemple est un système informatique. Le procédé de l'invention convient à la navigation dans tout arbre. Il sera appliqué à titre d'exemple dans la suite du texte à l'administration d'au moins une ressource, telle qu'une machine, un réseau ou une application, du système informatique. L'invention a donc aussi pour objet connexe le système d'administration en résultant.

L'invention peut être adaptée aux protocoles classiques ainsi qu'aux protocoles destinés plus particulièrement aux réseaux interconnectés de forte densité et de grande étendue, tels que les réseaux de type internet de la Toile (Web).

### L'art antérieur.

L'administration de ressources informatiques est ordinairement faite par une plate-forme d'administration dont on connaît plusieurs types. La plate-forme qui servira d'exemple par la suite est celle connue sous le nom de marque déposée OpenMaster, commercialisée par le demandeur. Cette plate-forme se fonde sur une technologie orientée objets. Selon cette technologie, les moyens constituant une ressource informatique sont convertis en classes d'objets organisées hiérarchiquement dans un arbre constituant une base d'informations d'administration MIB (Management Information Base).

La plate-forme prise ici comme exemple non limitatif utilise le protocole normalisé de communication dédié à l'administration, connu sous le nom de protocole CMIP (Common Management Information Protocol). Le protocole CMIP repose sur la norme ISO définissant les services pour le transfert des informations d'administration appelés services CMIS (Common Management Information Services). Ce protocole est organisé selon un langage de description des informations d'administration appelé langage GDMO/ASN.1 issu de directives pour la définition d'objets gérés (Guidelines for the Definition of Managed Objects) selon le modèle d'interconnexion connu sous le nom de marque déposée OSI (Open Systems Interconnection) de l'organisme international de normalisation ISO (International Standards Organisation), et de syntaxe ASN1 (Application Syntax Notation One). Pour des raisons de commodité, ce langage sera appelé simplement GDMO.

La plate-forme comprend des applications d'administration, par exemple adaptées à la découverte des objets de la base MIB, à la surveillance d'objets et à leur sécurité. Ces applications sont sous la commande d'un utilisateur et l'accès aux objets qu'elles manipulent se fait par émission de requêtes et réception de réponses. Les requêtes et réponses sont dirigées vers les objets cibles par un courtier de requêtes CMIP de la plate-forme. Cependant, la plupart des objets cibles ne peuvent être atteints qu'à travers des agents utilisant un protocole de transmission autre que CMIP et normalisé ou non. Comme autre protocole ayant reçu la norme ISO, on connaît le protocole SNMP (System Network Management Protocol) fondé sur la transmission de type TCP/IP (Transfer Control Protocol/Internet Protocol), et le protocole DSAC (Distributed Systems Administration and Control) pour une architecture de type DSA (Distributed System Architecture) du demandeur. La transmission des requêtes et des réponses se fait donc par une interface nommée intégrateurs d'agents, faisant la conversion entre le protocole CMIP de la plate-forme et l'autre protocole.

Cependant, il devient souhaitable que les applications puissent accéder à des objets appartenant à d'autres protocoles qui deviennent largement diffusés. Pour certains de ces protocoles, il serait possible de les convertir, mais avec de grandes difficultés et avec une certaine lourdeur. C'est le cas par exemple des ressources informatiques dont les données sont représentées selon une base technologique commune et dont les échanges de données et de services se font selon différents protocoles. Une de ces bases technologiques communes est une architecture d'objets distribués, telle que l'architecture CORBA (Common Object Request Broker Architecture) définie par le groupement de fournisseurs et d'utilisateurs travaillant à la normalisation de la gestion des objets et connu sous le nom OMG (Object Management Group), et l'architecture OLE/COM (Object Linking and Embedding / Component Object Modeler) de Microsoft. L'architecture CORBA sera prise comme exemple non limitatif dans la suite du texte. Dans le domaine de l'informatique distribuée, l'architecture CORBA permet de décrire des interfaces de services informatiques indépendamment des fournisseurs et des langages mettant en oeuvre ces services. La description des interfaces est faite à l'aide d'un langage neutre de description d'interface connu sous le nom de langage IDL (Interface Definition Language) défini aussi par le groupement OMG. Ce langage définit les frontières d'un composant que constitue un objet géré, c'est-à-dire les interfaces contractuelles du composant avec des clients potentiels.

Le génération automatique d'un intégrateur d'agents pour une architecture d'objets distribués CORBA selon le langage IDL comprend actuellement la création d'un fichier de description d'interface dans le langage IDL, la conversion automatique et la compilation du fichier de description. Plusieurs algorithmes de conversion sont connus, tels que ceux publiés par le groupe JIDM (Joint Inter-Domain Management) du groupe ORG. Le problème de ces algorithmes est que des notions conceptuelles pouvant être décrites en langage GDMO du protocole CMIP ne peuvent pas être décrites en langage IDL. Par conséquent, on n'obtient qu'une partie seulement des objets désirés de la base MIB. La solution actuelle consiste à compléter manuellement le code généré par la conversion, de façon à utiliser au mieux les caractéristiques du langage GDMO. Cette solution a donc comme inconvénient principal d'être coûteuse en temps et en argent.

Une autre base technologique commune de plus en plus utilisée est le modèle commun d'informations CIM (Common Information Model). Ce modèle normalisé est défini par le consortium DMTF (Desktop Management Task Force). Le modèle CIM est orienté objets et permet de définir des schémas conceptuels et des objets du monde réel destinés à l'administration. Il utilise un langage unifié de modélisation connu sous le nom de langage UML (Unified Modelling Language). Ce modèle reçoit actuellement un succès grandissant à cause de son adaptation aux échanges sur les réseaux de type internet. Il est ainsi utilisé pour l'administration d'entreprise par la Toile, connue actuellement sous l'acronyme WBEM (Web-Based Enterprise Management). En particulier, le modèle CIM offre le double avantage de pouvoir utiliser, d'une part, un navigateur pour chercher des données d'administration et, d'autre part, les technologies d'internet pour l'administration. Ce modèle offre encore l'avantage d'être bien adapté à des ressources incluant une architecture d'objets distribués.

Les fournisseurs de systèmes d'administration ou de composants de systèmes d'administration utilisant une base technologique commune de représentation des objets adoptent des protocoles différents d'échange de données et de services afin de satisfaire à la diversité des besoins des utilisateurs. Pour le modèle CIM qui sert d'exemple, il existe déjà des produits différents issus de fournisseurs différents. Étant donné le succès naissant de ce modèle, il est à prévoir beaucoup d'autres produits différents dans un proche avenir. Il faudrait donc autant d'intégrateurs d'agents qu'il y a de produits.

Il est aussi souhaitable que l'administration s'étende à d'autres domaines particuliers. C'est le cas notamment du domaine relatif à des objets stockés dans des répertoires (aussi appelés annuaires), surtout lorsque ces répertoires sont disparates et stockés dans des systèmes divers, souvent même incompatibles entre eux. Il en est ainsi par exemple du protocole LDAP (Lightweight Directory Access Protocol), qui utilise la couche TCP/IP comme transport nécessaire pour internet et qui fournit un protocole simple pour accéder à ces répertoires par l'intermédiaire d'internet. Ces répertoires peuvent contenir par exemple des informations sur des organisations et des individus (noms, adresses, numéros de téléphone), des clés publiques et autres ressources. Les répertoires peuvent être distribués dans plusieurs serveurs. Les objets d'un répertoire sont organisés en un arbre. Un intégrateur d'agents pour convertir ce protocole en CMIP ne poserait pas de difficultés car les deux protocoles sont très proches. Les deux ont en commun les fonctions de création, de suppression et de modification et permettent de préciser un filtre, une portée (scope) de requête et une liste d'attributs. Cependant, il existe d'autres protocoles dans le domaine des objets stockés dans des répertoires qui sont très différents du protocole CMIP et qui poseraient de grands problèmes ou seraient d'un emploi très lourd.

Le problème est donc de ne plus devoir accéder aux objets du système informatique à travers le protocole unique CMIP de la plate-forme, afin d'éviter l'emploi d'agents intégrateurs. Une solution consisterait à donner aux applications de la plate-forme d'administration un accès direct à des objets affectés à d'autres protocoles d'accès que CMIP, tels que par exemple les protocoles CORBA, CIM et LDAP.

Un accès sous divers protocoles à des objets d'un arbre hiérarchique est actuellement possible, tel que par exemple celui offert par l'interface de répertoires de nommage connue sous le nom de JNDI (Java Naming Directory Interface) utilisant le langage Java®. Cette interface permet d'accéder à des objets en les nommant d'une façon unique. Un avantage de ce nommage unique est d'être identique à celui utilisé par le service CMIS, qui utilise le langage de description GDMO du protocole CMIP de la plate-forme prise comme exemple. L'interface JNDI est donc aussi facilement adaptable au protocole LDAP, qui est proche de CMIP. Elle est capable de donner de façon transparente un accès commun à tous les objets appartenant à des domaines différents et hétérogènes. Cet accès commun est obtenu à l'aide de couches protocolaires connues sous le nom de couches SPI (Service Protocol Interface) et affectées respectivement aux protocoles des objets cibles hétérogènes. En plus des couches SPI possibles affectées à des protocoles respectifs, il peut exister une ou plusieurs couches SPI non affectées à un protocole, par exemple une couche SPI pour accéder au contenu d'un disque sur un ordinateur. Dans ce cas, la couche SPI est affectée à un moyen d'accès.

Chaque couche SPI est représentative d'un contexte particulier. Ce contexte est créé lors d'une opération sur la couche SPI. Ainsi, pour accéder à des objets appartenant à un protocole désiré (CMIP, CORBA, LDAP, CIM ou autre), l'interface commune JNDI demande, à la couche SPI correspondant au protocole particulier, de créer un contexte indiquant comment accéder à tout objet affecté au protocole de la couche SPI correspondante. Il faut donc connaître la sémantique de l'objet pour créer le contexte correspondant au domaine d'administration de l'objet. L'interface JNDI sert d'intermédiaire à l'utilisateur qui, en désignant la couche SPI qu'il veut utiliser à l'aide d'une application d'administration, crée le contexte correspondant. Une telle connaissance de la sémantique de chaque objet par une application pose notamment un problème pratiquement insurmontable lié à la prise en compte dans une application d'un nouveau protocole ou d'un nouveau moyen d'accès. Cette prise en compte requiert une modification du code de l'application pour donner la connaissance du contexte des objets à manipuler. Une telle solution n'est pas envisageable dans la pratique. De plus, les objets sont définis dans un environnement pouvant être très évolutif. De surcroît, pour chaque domaine d'activité affecté normalement à un protocole particulier, un contexte différent doit être créé et pris en compte par l'application.

### Sommaire de l'invention.

Un premier but de l'invention est de rendre possible un accès générique à tout objet dans un arbre. On appelle accès générique à un objet un accès indépendant du protocole qui est attaché à l'objet. En d'autres termes, un accès générique fait abstraction du moyen utilisé pour accéder à l'objet. Dans le cadre de l'exemple choisi, le procédé d'accès conforme à l'invention ne requiert donc pas de toute application la connaissance du contexte de l'objet et ne nécessite pas une modification du code de l'application.

Un second but de l'invention est d'offrir un accès générique évolutif, les objets de l'arbre pouvant varier et d'autres protocoles pouvant être ajoutés ou soustraits sans nécessiter de modification substantielle des moyens existants mis en oeuvre pour avoir un accès générique.

Un troisième but de l'invention consiste en un procédé pouvant être facilement mis en oeuvre pour accéder aux objets d'un arbre hétérogène, sans alourdir l'exécution du procédé classique.

Un quatrième but de l'invention consiste à obtenir un accès générique peu coûteux.

L'invention a pour objet un procédé d'accès selon au moins deux protocoles à des objets dans un arbre représentatif d'au moins une ressource de système, le procédé utilisant des moyens d'interface pour l'accès aux objets de l'arbre selon lesdits protocoles, caractérisé en ce qu'il comprend au moins un cycle comprenant les étapes de : faire une requête désignant un objet cible à accéder dans l'arbre et ayant une portée d'un seul niveau sous l'objet cible, utiliser un attribut protocolaire d'accès de l'objet cible indiquant son protocole d'accès pour permettre l'accès à l'objet cible par l'intermédiaire des moyens d'interface, et obtenir de la requête une réponse incluant au moins l'attribut de nommage de chaque objet contenu dans la portée de la requête et, si au moins un objet contenu dans la portée de la requête a un protocole d'accès différent de celui de l'objet cible, l'attribut protocolaire d'accès de cet objet.

L'invention a pour objet connexe un système d'administration d'une ressource de système représentée par un arbre d'objets contenu dans une base d'informations d'administration, le système d'administration incluant une application générique pour l'administration de la ressource par l'intermédiaire de moyens d'interface permettant l'accès aux objets de l'arbre selon au moins deux protocoles, caractérisé en ce que l'accès à des objets de l'arbre est fait selon le procédé défini précédemment.

L'invention a aussi pour objet connexe un système, tel qu'un système informatique, incluant au moins une ressource de système représentée sous forme d'un arbre d'objets, caractérisé en ce que l'accès à des objets de l'arbre est fait selon ledit procédé ou à l'aide dudit système d'administration.

L'invention a encore pour objet connexe un programme d'ordinateur chargeable dans une mémoire interne à un système informatique, caractérisé en ce qu'il comprend des parties de code pour la mise en oeuvre dudit procédé .

L'invention a pour autre objet connexe un support d'enregistrement de programme d'ordinateur, caractérisé en ce qu'il comprend un programme lisible par une machine d'un système informatique et/ou dans un système d'administration pour commander l'exécution dudit procédé.

### Présentation des dessins.

- La figure 1 est une vue synoptique d'un système d'administration d'un système informatique, le système d'administration mettant en oeuvre un procédé d'accès sous plusieurs protocoles à des objets d'un arbre représentatif d'au moins une ressource du système informatique.
- La figure 2 est une vue synoptique détaillée de la structure d'une plate-forme d'administration du système d'administration représenté sur la figure 1 et illustrant un exemple de mise en oeuvre du procédé.
- La figure 3 est une vue schématique simplifiée et partielle d'un exemple de base MIB correspondant au système informatique représenté sur la figure 1.
- Et la figure 4 est une vue schématique partielle d'un exemple d'arbre d'objets correspondant à la base MIB représentée sur la figure 3, cet exemple servant à illustrer les étapes du procédé d'accès à des objets de l'arbre.

### Description détaillée d'exemples illustrant l'invention.

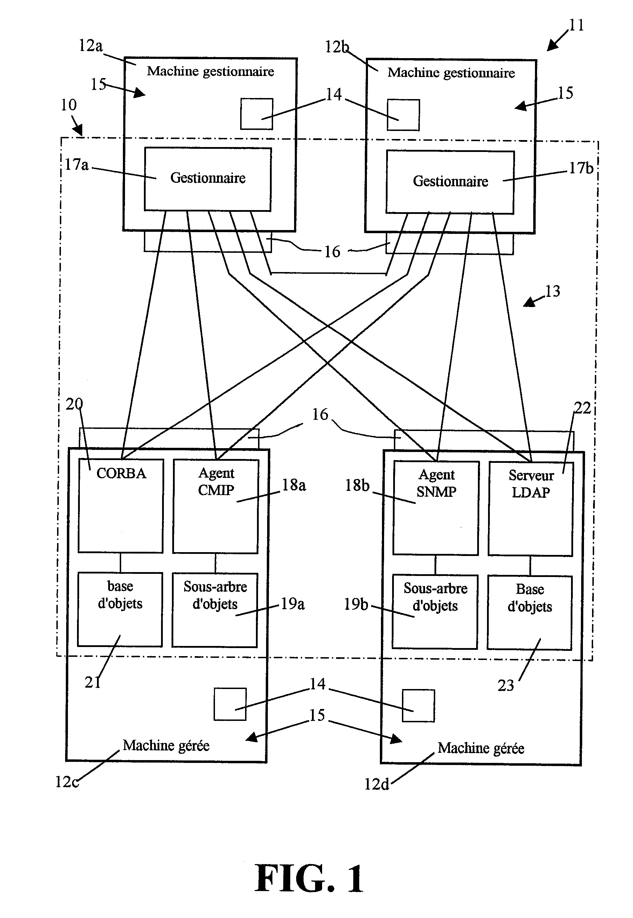

La figure 1 représente un système d'administration 10 d'un système informatique 11. L'exemple qui suit se rapporte au système d'administration et de sécurité connu sous le nom de marque déposée OpenMaster du demandeur. Sa conception est conforme aux normes ISO de l'administration de systèmes et réseaux. Dans ces conditions, les termes utilisés seront conformes à cette norme, qui sont de langue anglaise, notamment les sigles et acronymes. D'autre part, les verbes "administrer" et "gérer" et leurs dérivés qui seront employés ici traduisent tous deux indifféremment le verbe anglais "manage" et ses dérivés. L'homme du métier connaît bien ces normes. Compte tenu de leur masse informative, on ne donnera ici que les éléments nécessaires à la compréhension de l'invention.

Le système informatique illustré 11 est distribué et se compose de machines 12, en l'occurrence quatre machines 12a-12d, organisées en un ou plusieurs réseaux 13. Une machine est une unité conceptuelle très large, de nature matérielle et logicielle, pouvant être les moyens impliqués pour exécuter une application donnée, des moyens pour exécuter une fonction donnée, un ordinateur, ainsi qu'un système informatique dans une architecture à systèmes en cascade. Les machines 12 peuvent être donc très diverses, telles que stations de travail, serveurs, routeurs, machines spécialisées et passerelles entre réseaux. Le système informatique 11 est ordinairement un système comprenant plusieurs processeurs 14, un processeur 14 étant par exemple illustré dans chaque machine 12, des moyens de mémoire 15 pour contenir les logiciels et les données du système, et des moyens d'entrée-sortie 16 servant pour la communication entre machines par l'intermédiaire du réseau 13 à l'aide de protocoles divers, ainsi que pour une ou plusieurs communications extérieures, par exemple pour l'impression, la télécopie, etc. Un tel système peut par exemple gérer des données à distance, distribuer des données dans le cas d'un système de réservation, commander l'exécution de programmes à distance sur des machines spécialisées, partager localement des ressources physiques ou logicielles, et communiquer. Plus généralement, le système 11 se compose de ressources matérielles et/ou logicielles, réelles ou virtuelles, telles que machines, imprimantes, circuits virtuels, réseaux et applications. Le système d'administration 10 utilise au moins l'une de ces ressources selon un modèle de données orienté objets, dont on connaît les principales caractéristiques : classes, objets, héritage, encapsulation, méthodes et événements.

Le système d'administration 10 choisi a une architecture de type client-serveur. Dans l'exemple illustré, deux gestionnaires 17a, 17b forment des serveurs d'administration inclus dans les machines 12a et 12b, dites machines gestionnaires, tandis que les clients d'administration 18, 20 et 22 sont inclus dans les machines 12c et 12d, dites machines gérées. Selon une option courante et avantageuse du système d'administration 10, un gestionnaire 17a gère aussi la machine gestionnaire 12a correspondante ou gère tout ou partie des machines gestionnaires. Cela peut se faire de façon similaire à celle illustrée précédemment, plus ou moins adaptée à cette option. L'exemple illustré offre le double avantage de faciliter la lecture des dessins tout en permettant à l'homme du métier de faire une généralisation du système décrit et illustré.

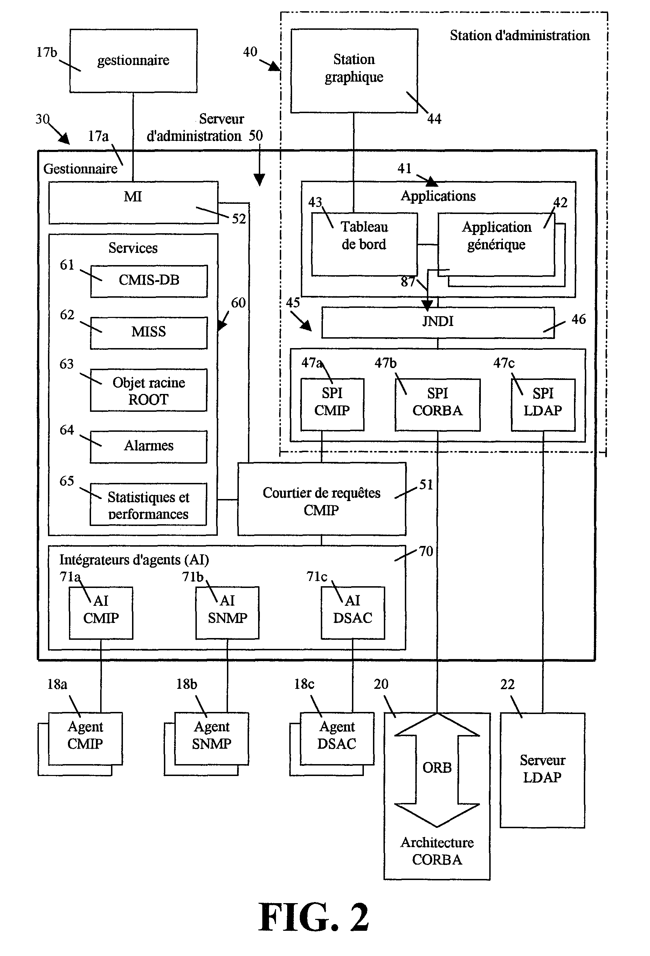

La figure 2 illustre la structure d'une plate-forme d'administration 30 du système d'administration 10. La plate-forme 30 peut être limitée à une machine gestionnaire ou être distribuée parmi plusieurs machines gestionnaires. Pour des raisons de commodité, la plate-forme illustrée dans la figure 2 sera limitée à la machine gestionnaire 12a et correspond ainsi au gestionnaire 17a. La plate-forme 30 se compose de deux ensembles 40 et 50. L'ensemble 40 contient un bloc 41 contenant un ensemble d'applications génériques (core applications) 42 connectées à un tableau de bord 43. Les applications peuvent être écrites dans un plusieurs langages, le langage SML étant le langage choisi. Le tableau de bord 43 est classique et inclut une partie graphique et un lanceur de requêtes. Une station graphique 44, extérieure à la plate-forme 30, permet de visualiser les applications, lancer les requêtes et visualiser les résultats contenus dans les réponses. Elle permet à un utilisateur de se connecter à la machine 12a pour démarrer et arrêter comme il le désire ses propres copies des applications 42. L'ensemble 40 comporte des moyens 45 d'interface d'accès sous divers protocoles aux objets du système d'administration 10. Cette interface met en oeuvre le procédé conforme à l'invention et sera décrite ultérieurement. L'ensemble 40 peut former une unité autonome délimitée par un trait fantôme et constituer une station d'administration.

Dans le cas où l'ensemble 40 constitue une station d'administration, l'ensemble 50 forme un serveur d'administration. Le serveur 50 utilise un seul protocole donné, ici le protocole CMIP. Il comprend quatre blocs fonctionnels : un bloc de communication 51 aussi appelé courtier de requêtes CMIS ou distributeur CMIS (CMIS Dispatcher) ; un bloc 52 intégrateur de gestionnaires MI (Manager Integrator) en liaison avec au moins un autre gestionnaire, ici le gestionnaire 17b, et/ou avec un supra-gestionnaire ; un bloc 60 de services ; et un bloc 70 d'intégrateurs d'agents 71a-71c affectés à des protocoles respectifs tels que CMIP, SNMP et DSAC illustrés. Le courtier 51 est connecté aux moyens d'interface 45 de la station 40 pour traiter les requêtes sous le protocole CMIP, au bloc MI 52, au bloc 60 des services et au bloc 70 d'intégrateurs d'agents. Le bloc 60 contient tous les services communs aux applications 42, notamment : une base CMIS-DB 61 de données CMIS ; un service 62 de schémas d'informations d'administration, appelé MISS (Management Information schema Service) contenant les schémas, aussi dits classes ou modèles, des objets gérés par la plate-forme ; un service 63 de gestion d'objets sous la racine ROOT à laquelle sont attachés tous les objets gérés ; un service 64 d'alarmes ; et un service 65 de statistiques et performances utilisées pour des applications 42 de performances.

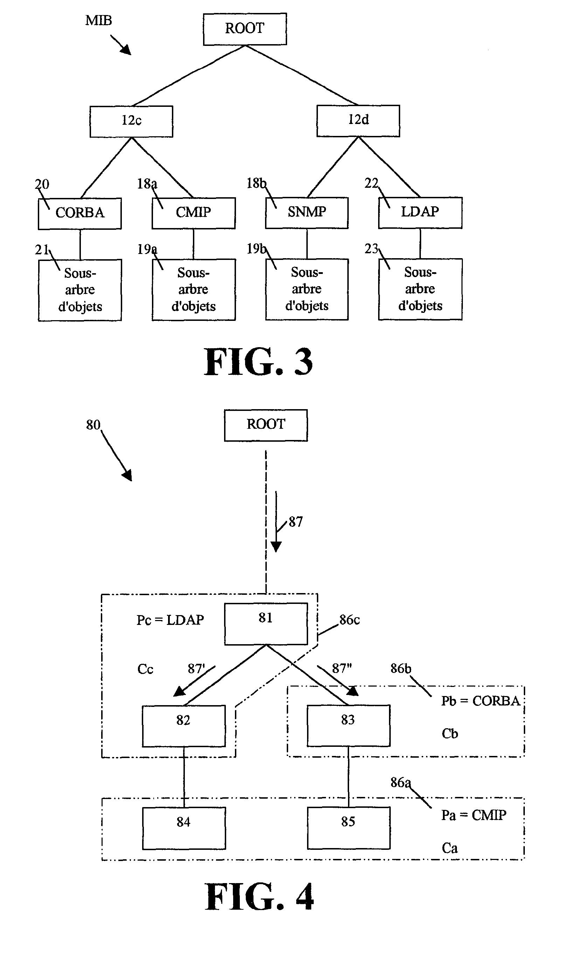

La figure 3 illustre de façon schématique et très partielle un exemple de structure d'une base MIB des objets gérés par le système d'administration 10 et représentatifs de ressources du système informatique 11. Dans l'exemple choisi, la ou les ressources du système informatique 11 sont converties en classes d'objets organisées hiérarchiquement dans une base d'informations d'administration MIB (Management Information Base). Cette base n'est pas une base de données proprement dite, mais est assimilable à un catalogue de caractéristiques puisqu'elle contient la description et le contenu de toutes les classes gérées par le système d'administration 10.

La figure 4 est un exemple simplifié et partiel d'un arbre 80 correspondant à la base MIB. On distingue entre l'arbre des classes, une classe étant définie en subordination à une ou plusieurs classes mères, et l'arbre des instances, une instance étant attachée à une ou plusieurs instances mères. L'arbre des classes est contenu dans le service MISS 62, tandis que l'arbre des instances est l'arbre 80. Une classe est définie par des caractéristiques nommées attributs, tels qu'un nom d'un composant du système et un état d'impression. Un objet d'une classe sera appelé une instance de la classe. Un objet géré est donc une vue abstraite, définie pour les besoins de la gestion, d'une ressource logique ou physique d'un système.

Les objets dans l'arbre peuvent être identifiés de façon unique en utilisant une règle de d'attribution de nom appelée couramment règle de « nommage » (naming rule) basée sur un ordre hiérarchique. Une instance dans la base MIB a un nom distinctif relatif RDN (Relative Distinguished Name) sous forme d'une liste d'assertions sur valeur d'attribut appelées assertions AVA (Attribute Value Assertion). Chaque assertion AVA est un couple < attribut de nommage> < valeur >, l'attribut de nommage étant celui qui, dans la classe, permet l'identification unique, dans un espace de nommage, d'une instance par rapport à son instance mère. Dans un gestionnaire 17a de l'exemple illustré, un nom RDN est composé d'une seule assertion AVA, donc d'un seul couple < attribut de nommage> < valeur > . D'une manière générale, il est cependant possible qu'un nom distinctif RDN ait plusieurs assertions AVA. Chaque instance dans la base MIB est identifiée de façon unique par son nom distinctif DN (Distinguished Name), qui est la suite des noms RDN sur le chemin entre la racine et l'instance dans l'arbre des instances. Un sous-arbre d'une instance correspond à l'ensemble formé par l'instance elle-même et les instances qui lui sont subordonnées dans l'arbre des instances.

Tous les objets de la base MIB dans la figure 3 sont placés sous la racine ROOT et sont répartis en sous-MIB, ici représentatifs des deux machines gérées 12c et 12d, correspondant à deux sous-arbres. La racine ROOT est contenue dans le service 63 et les racines des sous-arbres seront appelées sous-racines correspondant au terme anglais Rootlet. Ainsi, toute application 42 devant traiter un objet de la base MIB s'adresse au service 63 pour accéder à l'objet. Les objets peuvent être accédés par l'intermédiaire de divers protocoles. Dans l'exemple illustré dans les figures 1 et 2, on distingue d'abord les objets pouvant être accédés par l'intermédiaire d'agents 18a et 18b et réunis en sous-MIB 19a et 19b respectifs. Les agents 18a et 18b sont inclus dans les machines gérées respectives 12c et 12d et sont, dans l'exemple illustré, affectés aux deux protocoles CMIP et SNMP. D'une manière plus générale, une machine peut inclure plusieurs agents relatifs à des protocoles différents. Dans la figure 2 sont aussi ajoutés des agents DSAC 18c. L'ensemble des agents, par exemple 18a, relatifs à un même protocole est relié au courtier 51 de la plate-forme 30 par l'intermédiaire d'un intégrateur respectif 71a du bloc 70. Ainsi, les objets liés aux protocoles CMIP, SNMP et DSAC peuvent être respectivement accédés par l'intermédiaire des agents CMIP 18a, SNMP 18b et DSAC 18c, via le réseau 13, des intégrateurs respectifs CMIP 71a, SNMP 71b et DSAC 71c. De tels intégrateurs sont bien connus.

Les figures 1, 2 et 3 font aussi apparaître que la machine gérée 12c contient aussi une architecture CORBA 20 d'objets distribués dans une sous-MIB 21 et la machine gérée 12d contient un serveur LDAP 22 pourvu d'une base d'objets 23 constitutive d'une sous-MIB. La figure 1 est une représentation simplifiée pour faciliter la description, l'homme du métier sachant que les objets des sous-MIB 21 et 23 peuvent être aussi distribués dans d'autres machines du système informatique 11. Ainsi, des objets de la sous-MIB 21 peuvent être contenus dans la machine 12d et des objets de la sous-MIB 23 peuvent être contenus dans la machine 12c. D'autre part, chaque machine peut contenir plusieurs agents différents et des machines peuvent avoir des agents de même type. On comprend que l'arbre 80 qui correspond à la base MIB de la figure 3 est donc en réalité un arbre d'objets hétérogènes pouvant être accédés sous divers protocoles.

La figure 2 illustre un exemple de structure des moyens d'interface 45 qui permettent aux requêtes émises par les applications de la plate-forme 30 d'accéder selon trois protocoles Pa, Pb et Pc, en l'occurrence les protocoles respectifs CMIP, CORBA et LDAP, à des objets correspondants de la base MIB représentée schématiquement et très sommairement sur la figure 3. Les moyens d'interface 45 comprennent une interface 46 commune pour l'accès aux objets de l'arbre 80 et trois couches d'interface 47a-47c adaptées aux trois protocoles respectifs CMIP, CORBA et LDAP. Les trois couches d'interface 47a-47c relient l'interface commune 46 aux trois moyens de gestion des objets sous les trois protocoles respectifs, à savoir le serveur d'administration 50, l'architecture CORBA et le serveur LDAP. Dans l'exemple de réalisation choisi, l'interface commune 46 est une interface de répertoires de nommage en langage Java® connue sous le nom JNDI et les trois couches sont des couches protocolaires de service associées connues sous le nom SPI (Service Protocol Interface) et fournies par la société Sun Microsystems, Inc.

L'arbre 80 de la figure 4 inclut la racine ROOT et un objet cible 81 du protocole LDAP. L'objet 81 peut correspondre au serveur LDAP 22 dans la base MIB de la figure 3 ou à un objet situé à un niveau plus bas sous la racine ROOT. L'objet 81 est père d'un premier fils 82 de protocole LDAP et d'un second fils 83 de protocole CORBA. Le premier fils 82 est lui-même père d'un fils 84 de protocole CMIP et le second fils 83 est père d'un fils 85 de protocole CMIP. L'arbre 80 définit donc trois espaces de nommage 86a-86c illustrés en traits fantômes, relatifs aux trois protocoles respectifs CMIP, CORBA et LDAP et contenant respectivement les objets 84-85, 83 et 81-82

Un exemple de mise en oeuvre du procédé d'accès à des objets de l'arbre 80 va maintenant être décrit. Le procédé comprend au moins un cycle incluant trois étapes. Dans la première étape, une requête 87 représentée sous forme d'une flèche dans les figures 2 et 4 est faite pour accéder à un objet, l'objet cible 81 dans la figure 4 par exemple. Dans l'exemple illustré, la requête 87 est émise d'une application générique 42 vers l'interface commune 46. La requête 87 a une portée limitée au seul premier niveau sous l'objet cible 81. Un accès portant sur le premier niveau sous l'objet cible 81 (access scope of first level only) est défini comme consistant à connaître seulement les objets fils de l'objet cible, ici les objets 82 et 83. Un accès de portée à deux niveaux consiste à connaître seulement les objets fils et petits-fils de l'objet cible, en l'occurrence les objets 82-85. La portée est limitée au premier niveau sous l'objet cible du fait que les objets de l'arbre 80 ont des protocoles d'accès hétérogènes comme l'arbre 80, comme cela ressortira ultérieurement.

Dans la seconde étape, la requête 87 utilise l'interface commune pour accéder à l'objet cible 81. Pour accéder à des objets appartenant à un protocole particulier, ici CMIP, CORBA ou LDAP, l'interface commune JNDI 46 demande la création d'un contexte en utilisant la couche d'interface protocolaire SPI 47 correspondant au protocole particulier. Dans l'exemple de la figure 4, l'accès à l'objet 81 ou 82 appartenant à l'espace de nommage 86c relatif au protocole LDAP nécessite la création d'un contexte Cc relatif à la couche 47c. Ce contexte Cc donne accès aux objets appartenant à ce protocole. De même, en référence aux figures 2 et 4, l'accès à l'objet 83 appartenant à l'espace de nommage 86b relatif au protocole CORBA nécessite un contexte Cb relatif à la couche 47b et l'accès aux objets 84 et 85 appartenant à l'espace de nommage 86a relatif au protocole CMIP nécessite un contexte Ca relatif à la couche 47a.

Un contexte C est principalement constitué de deux attributs : un attribut de construction connu sous le nom « factory » et un attribut de localisation connu sous le nom «URL » (Uniform Ressource Locator). L'attribut « URL » est une adresse (un endroit, une machine physique par exemple) où l'on peut trouver du logiciel sachant exécuter ce morceau de code. L'attribut constructeur « factory » est le morceau de code qui permet d'accéder à l'objet en faisant une requête 87 et d'avoir les propriétés de l'objet, c'est-à-dire les valeurs de ses autres attributs. L'attribut « factory» désigne notamment l'espace de nommage de l'objet, c'est-à-dire le protocole attaché à l'objet. Grâce à cet attribut, l'interface commune 46 sait donc désigner la couche protocolaire d'accès. De l'interface commune 46, la requête 87 est donc dirigée vers la couche d'interface 47c relative au protocole LDAP d'accès à l'objet cible 81 qui est défini dans le contexte Cc de cet objet. Dans l'exemple illustré dans les figures 1 à 4, l'accès se fait donc à partir de la racine ROOT en utilisant le service 63.

En résumé, la première étape du procédé comprend la création d'une requête désignant un objet cible à accéder dans l'arbre et ayant une portée limitée au premier niveau sous l'objet cible. En d'autres termes, le procédé conforme à l'invention permet d'accéder à des objets de l'arbre 80 et de naviguer ainsi dans l'arbre sans prendre en compte la sémantique des objets, en effectuant la navigation au moyen d'une requête 87 ayant une portée limitée au premier niveau. En ce qui concerne l'accès à l'objet cible, il est à noter qu'il est possible de connaître dans un même espace de nommage tous les objets sous un objet cible. Par conséquent, l'objet cible 81 peut être juste sous la racine ROOT ou à un niveau plus bas à partir d'une sous-racine du même espace de nommage que l'objet cible. Cependant, il n'est pas possible de connaître les propriétés des objets de tout autre espace de nommage que celui de l'objet cible, mais on sait les nommer. Pour connaître les propriétés de ces objets, la seconde étape comprend l'utilisation d'un attribut protocolaire d'accès de l'objet cible indiquant son protocole d'accès pour permettre l'accès à l'objet cible par l'intermédiaire de l'interface commune et de la couche d'interface relative au protocole d'accès de l'objet cible. Dans l'exemple choisi, l'attribut protocolaire d'accès est constitué par l'attribut constructeur « factory » et, accessoirement, l'attribut URL du contexte de l'objet dont l'espace de nommage est différent de celui de l'objet cible.

On sait que la réponse à une requête est une liste des objets se trouvant dans la portée de la requête. Chaque objet a un certain nombre d'attributs. La troisième étape du cycle du procédé est d'obtenir de la requête une réponse incluant au moins l'attribut de nommage de chaque objet se trouvant dans le ou les niveaux de la portée de la requête. L'attribut de nommage suffit tant que chaque objet se trouvant dans la portée de la requête appartient au même espace de nommage que l'objet cible. L'accès à l'un des objets dans la portée de la requête se fait avec le même contexte dans un second cycle. Cependant, si au moins un objet inclus dans la portée de la requête appartient à un autre espace de nommage, il est nécessaire de connaître au moins l'attribut protocolaire de cet objet pour pouvoir accéder à cet objet dans un second cycle du procédé. Dans l'exemple choisi, la réponse inclut aussi comme attribut optionnel le nom de la classe de l'objet. Cette troisième étape fait comprendre pourquoi la portée de la requête est limitée au premier niveau sous l'objet cible. A partir d'un objet, on sait nommer les objets fils et même les petits-fils, si tous ces objets appartiennent au même espace de nommage. Par contre, si l'un des objets fils n'appartient pas au même contexte que l'objet cible (objet père), à partir duquel a été effectuée la requête 87, la recherche devient impossible car on ne peut pas accéder à l'objet et connaître ses propriétés sans avoir son attribut protocolaire. On ne peut donc progresser progressivement dans chaque niveau de l'arbre.

Dans l'exemple des figures 1 à 4, la navigation dans l'arbre 80 se fait donc de la façon suivante. Partant de l'objet cible 81 de l'espace de nommage LDAP 86c, la requête lancée par une application générique 42 utilise la couche 47c. Elle a une portée d'un seul niveau et fournit donc comme réponse les objets 82 et 83. Cependant, l'application 42 qui effectue cette navigation dans l'arbre ne connaît pas le protocole des objets 82 et 83. Le procédé permet de donner une vue des objets qui se trouvent dans le niveau de la portée de la requête. Comme à ce niveau, l'objet père 81 ne possède pas nécessairement les mêmes attributs que les objets fils 82 et 83 puisqu'ils peuvent être de classes différentes, la réponse retourne l'attribut de nommage de chaque objet dans la portée. Cet attribut suffit si l'objet appartient au même espace de nommage que celui de l'objet cible. Si au moins un objet appartient à un autre espace de nommage, la réponse retourne aussi l'attribut protocolaire d'accès qui est dans l'exemple choisi l'attribut « factory » et, accessoirement et avantageusement, l'attribut « URL » du contexte de l'objet.

Ce premier cycle du procédé peut être suffisant. Sinon, ce cycle peut être réitéré une ou plusieurs fois en prenant comme nouvel objet cible l'un des objets de la réponse à la requête 87 du cycle précédent. Par exemple, le nouvel objet cible 82 étant choisi et appartenant au même protocole que l'objet cible précédent 81, une nouvelle requête 87' sera transmise par l'interface commune 46 et la même couche d'interface protocolaire 47c que pour la requête précédente 87 et la réponse inclura la classe et l'attribut de nommage de l'objet 84, ainsi que l'attribut protocolaire d'accès «factory» indiquant que l'objet 84 appartient au protocole CMIP. Par contre, si le nouvel objet cible est l'objet 83, son attribut protocolaire d'accès « factory » se rapporte au protocole CORBA et non plus au protocole LDAP de l'objet père 81. Une nouvelle requête 87" est donc transmise par l'interface commune 46 et la couche d'interface protocolaire 47b. La réponse à la requête 87" inclut la classe et l'attribut de nommage de l'objet 85, ainsi que l'attribut protocolaire d'accès « factory » indiquant que l'objet 84 appartient au protocole CMIP.

La navigation dans l'arbre devient ainsi générique, car à aucun niveau de l'arbre il n'est pas nécessaire de connaître la sémantique de l'objet, comme dans l'art antérieur. Grâce au procédé de l'invention, il suffit de vérifier la présence ou non d'un attribut « factory » dans la réponse et d'analyser son contenu pour connaître le contexte associé. L'absence d'un tel attribut signifie que l'objet a le même contexte que celui de l'objet cible. On peut donc prendre comme objet cible ce nouvel objet en conservant le même contexte et la même couche SPI que l'objet cible précédent. Si au moins un attribut protocolaire d'accès est présent, cet attribut indique qu'au moins un objet retourné dans la réponse (ici l'objet 83) appartient à un autre espace de nommage que celui de l'objet de départ 81 et que cet espace est défini par l'attribut « factory ». Par conséquent, pour pouvoir continuer la navigation dans l'arbre selon un autre protocole, il faut changer de contexte pour prendre celui relatif à cet autre protocole. Par contre, il est à noter que si l'application désire connaître l'ensemble des attributs de l'un quelconque des objets de l'arbre, elle doit effectuer une requête sur cet objet lui-même avec le contexte C associé à cet objet, et non pas avec une requête de portée donnée qui vient d'être décrite. Pour obtenir les attributs d'un objet appartenant à un autre contexte, elle doit effectuer une autre requête dont le type est déterminé par l'attribut protocolaire d'accès à cet objet.

Le résultat de la mise en oeuvre du procédé qui vient d'être décrit est qu'un objet (83 par exemple) est visible de deux façons différentes dans deux espaces de nommage différents. Il est d'une part visible dans l'espace 86c de l'objet cible 81, par l'intermédiaire de l'attribut de nommage et, accessoirement, de la classe de cet objet. En fait, l'objet 81 étant un objet père, il connaît une partie des attributs de ses fils, notamment l'attribut de nommage et la classe. Parmi les objets cible (père) et les objets fils, on peut avoir des objets différents au sens sémantique, donc pas nécessairement de la même classe. Il est d'autre part visible dans l'espace de nommage 86b de l'objet lui-même 83. L'espace 86b permet de connaître l'ensemble des attributs de l'objet 83 grâce à une requête basée sur la couche d'interface SPI 47b correspondante, définie à partir des attributs « factory »- « url » du contexte Cb associé.

Le procédé décrit et illustré en référence à la figure 4 peut donc être appliqué à un accès systématique de découverte des objets de l'arbre 80 de la figure 4, à partir de la racine ROOT. Dans l'exemple décrit, il est appliqué à une navigation faite à partir de la racine ROOT pour accéder à un objet cible dans l'arbre 80.

De nombreuses autres variantes pourraient être apportées par tout homme du métier à la lecture de l'exemple choisi. En particulier, il est à noter de l'exemple choisi que l'interface commune 46 demande la création d'un contexte en utilisant la couche d'interface protocolaire 47 correspondant au protocole particulier et que l'attribut protocolaire d'accès a été choisi en conséquence comme au moins l'attribut constructeur « factory » du contexte. Cependant, d'une manière générale, il ressort clairement de la description qui précède que, de manière générale, l'attribut protocolaire d'accès pourrait différent d'un attribut du contexte pour d'autres moyens d'interface 45.

Une réalisation de l'exemple illustré a été faite et comprend les quatre fichiers présentés dans l'annexe qui suit. Ils ont été créés par le demandeur et sont protégés par le droit d'auteur. Les quatre fichiers sont :
- DynamicTreeNode: ce fichier permet de construire un arbre hiérarchique à partir de l'API « Swing» (fournie par la société Sun). Pour chacun des noeuds de l'arbre on génère une requête par l'intermédiaire de l'interface commune JNDI afin de retrouver l'ensemble des objets fils au noeud correspondant. Pour chacune des réponses, on analyse la liste des attributs retournés pour voir si l'attribut « factory » est présent. Si c'est la cas, on crée un nouveau contexte avec un nouvel attribut « factory », sinon on utilise le même contexte que l'objet père, c'est-à-dire l'objet à partir duquel la requête a été générée ;
- MargueriteToolKit: ce fichier contient des données statiques, utiles à la construction de l'arbre ;
- JndiRequest : ce fichier permet de gérer un ensemble de contextes (pool de contextes) en mode partagé ; et
- SampleData : ce fichier contient la description d'un noeud de l'arbre. C'est à partir de cette description qu'une requête JNDI 87 peut être créée.

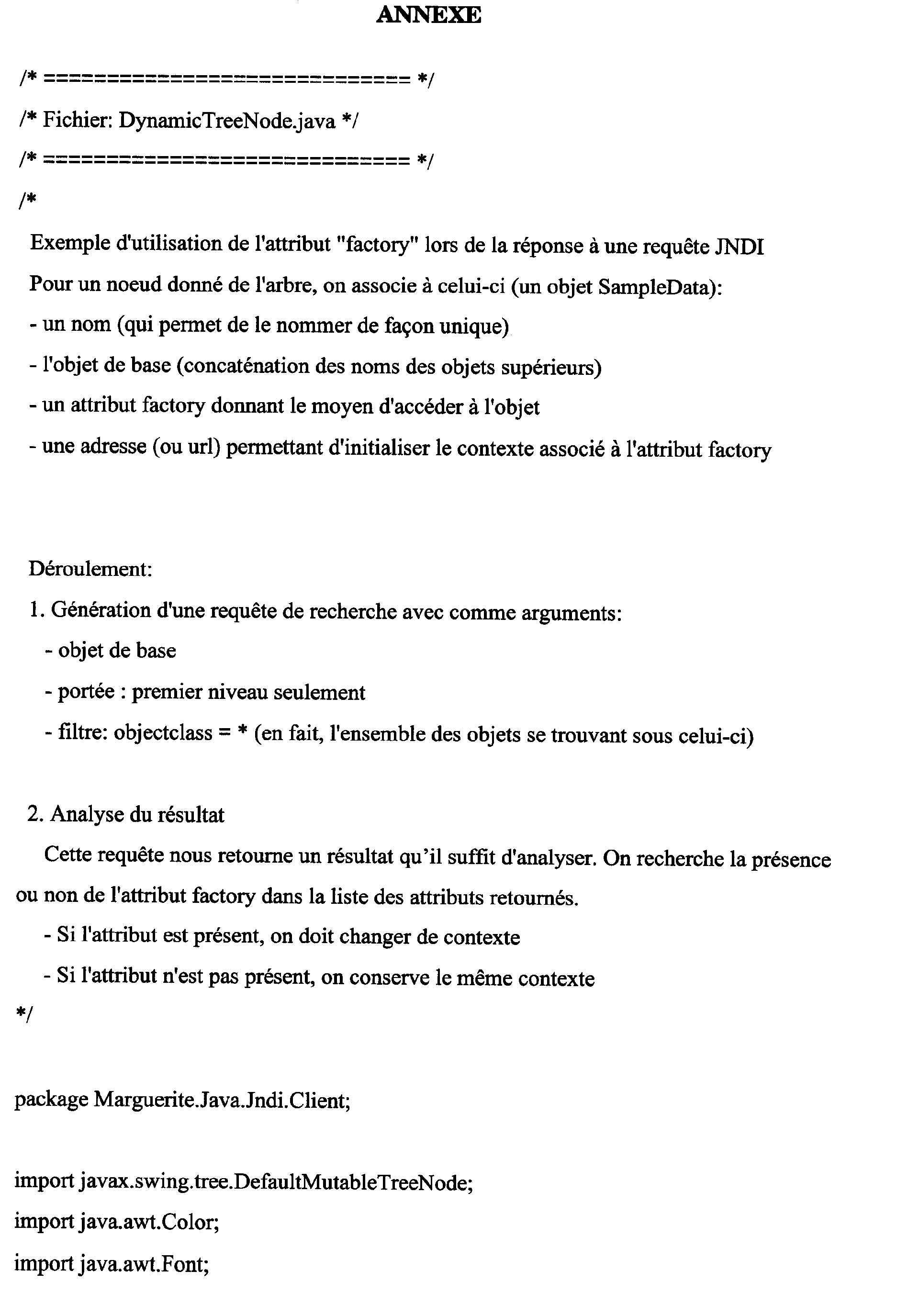

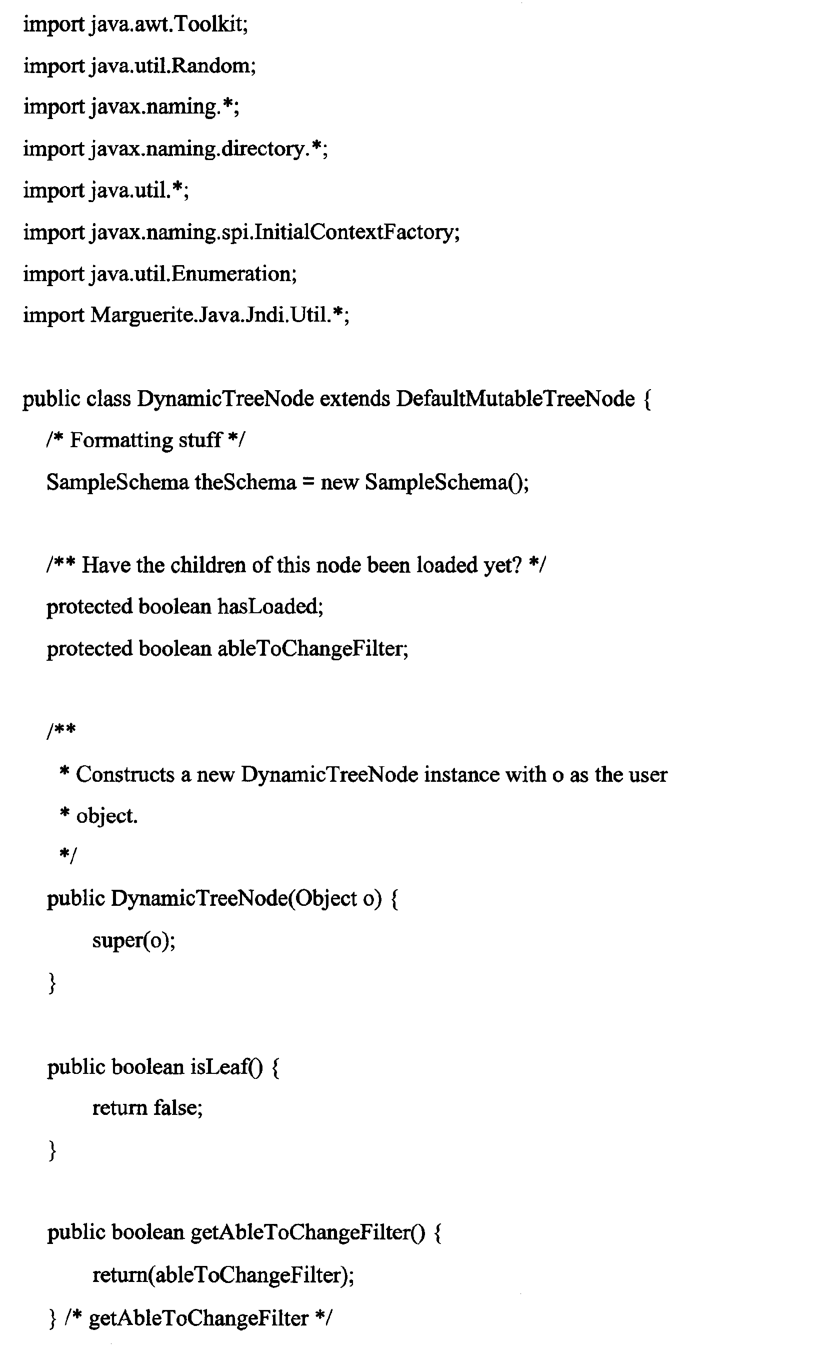

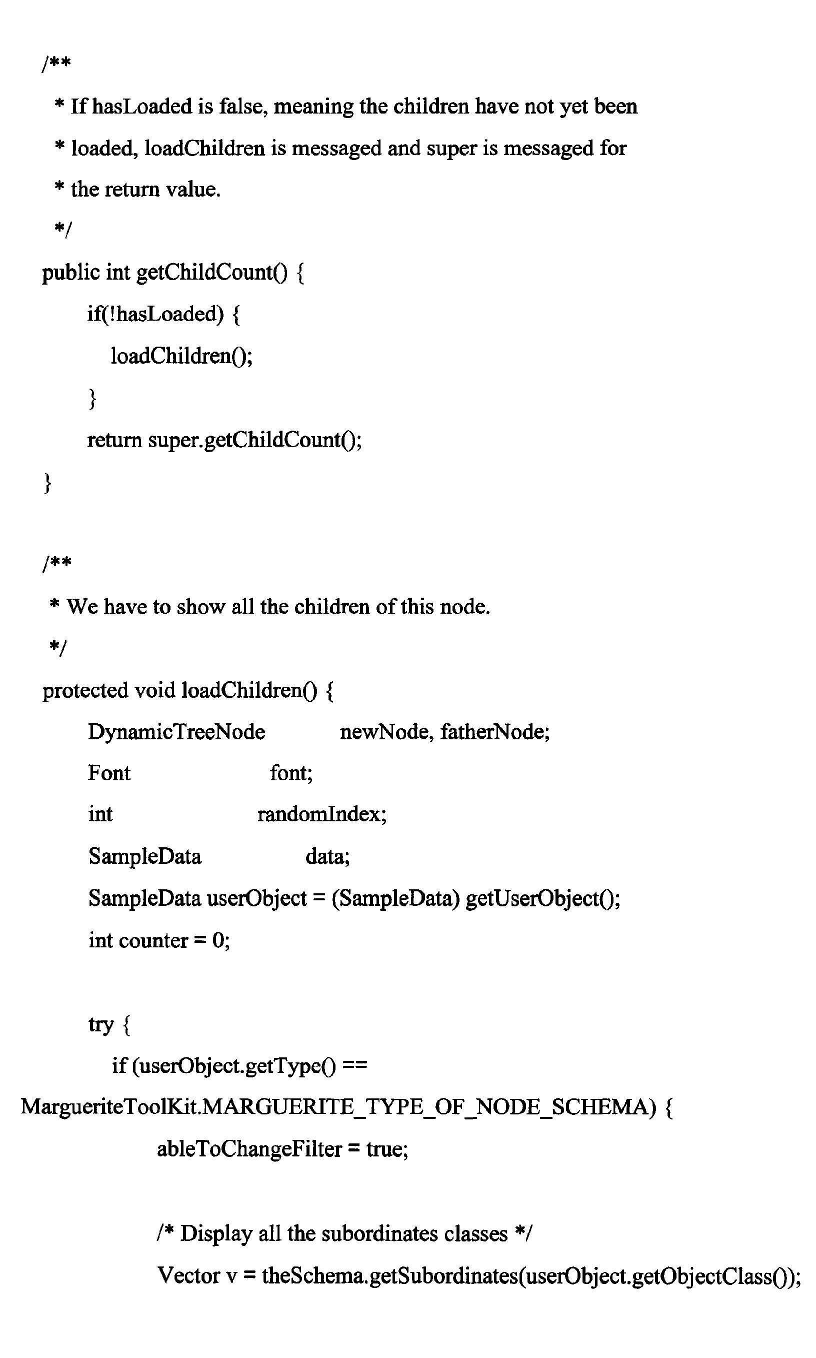

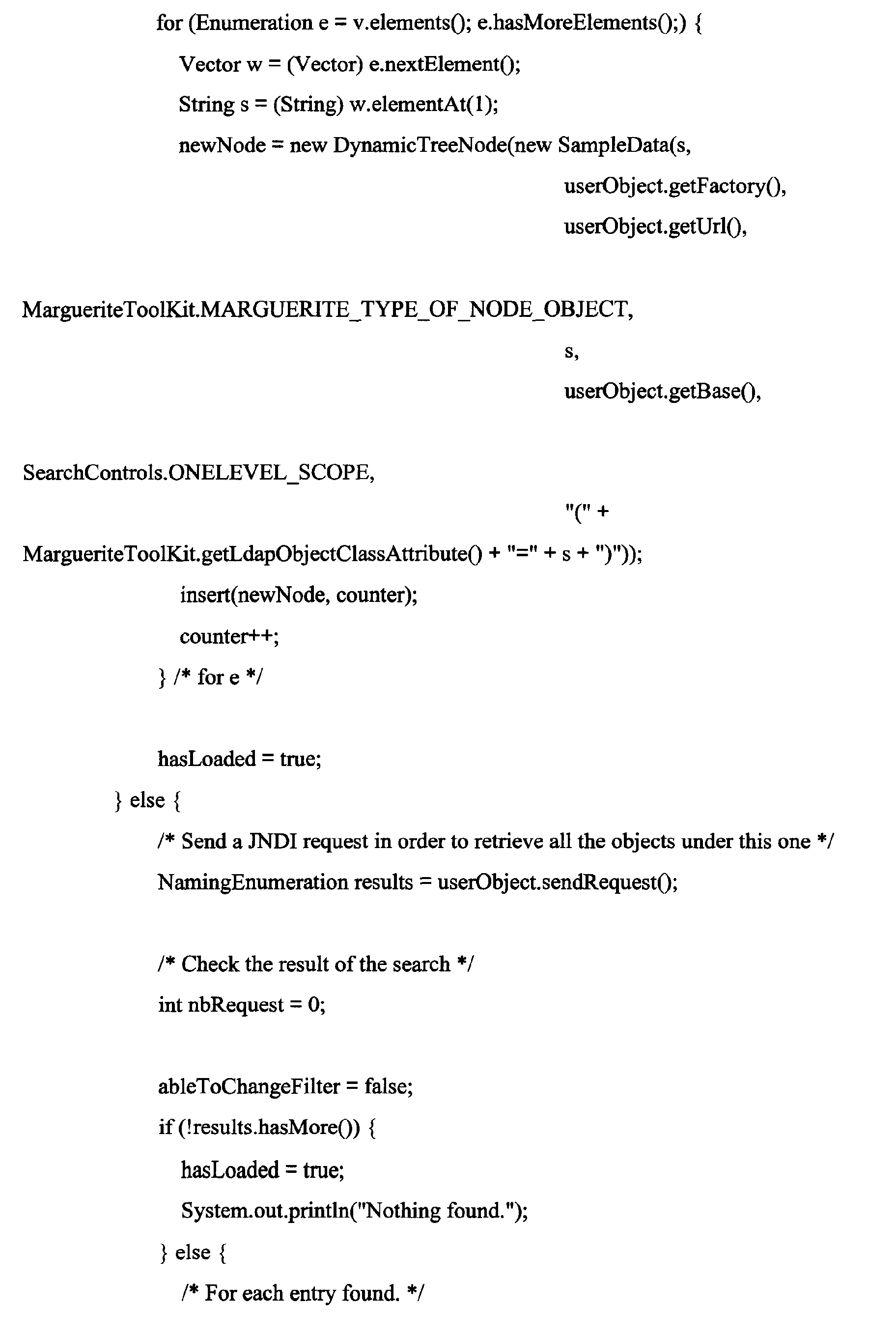

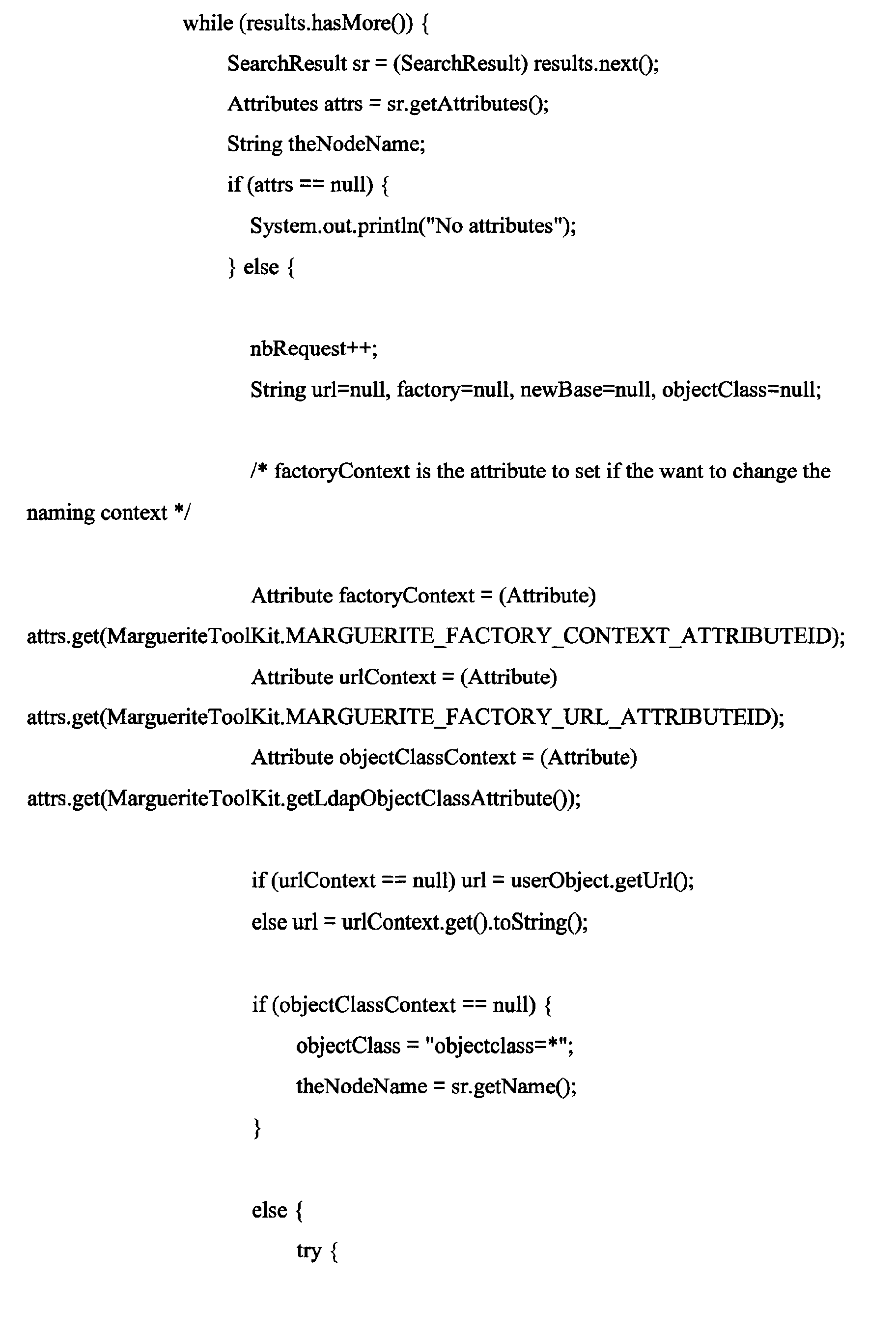

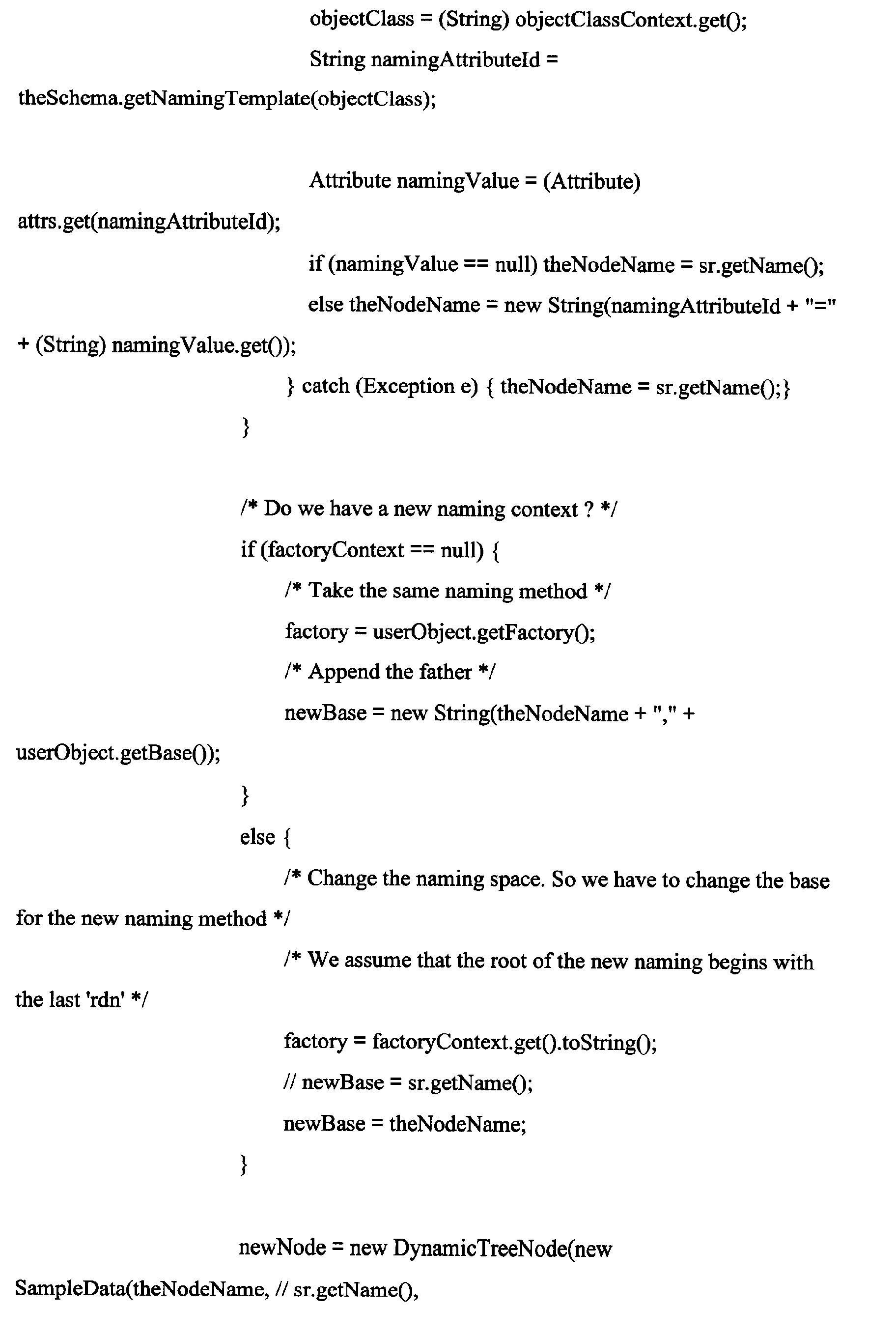

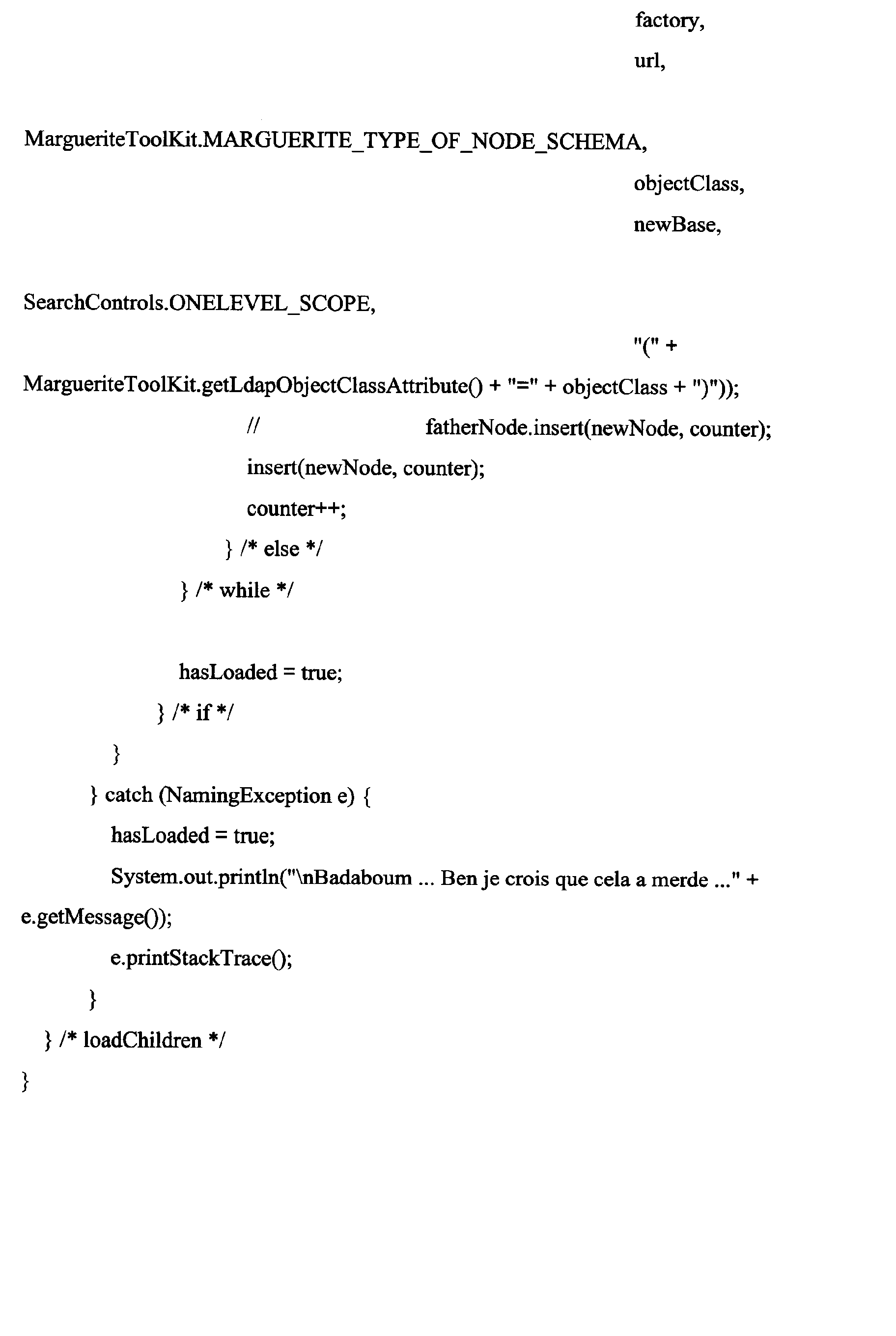

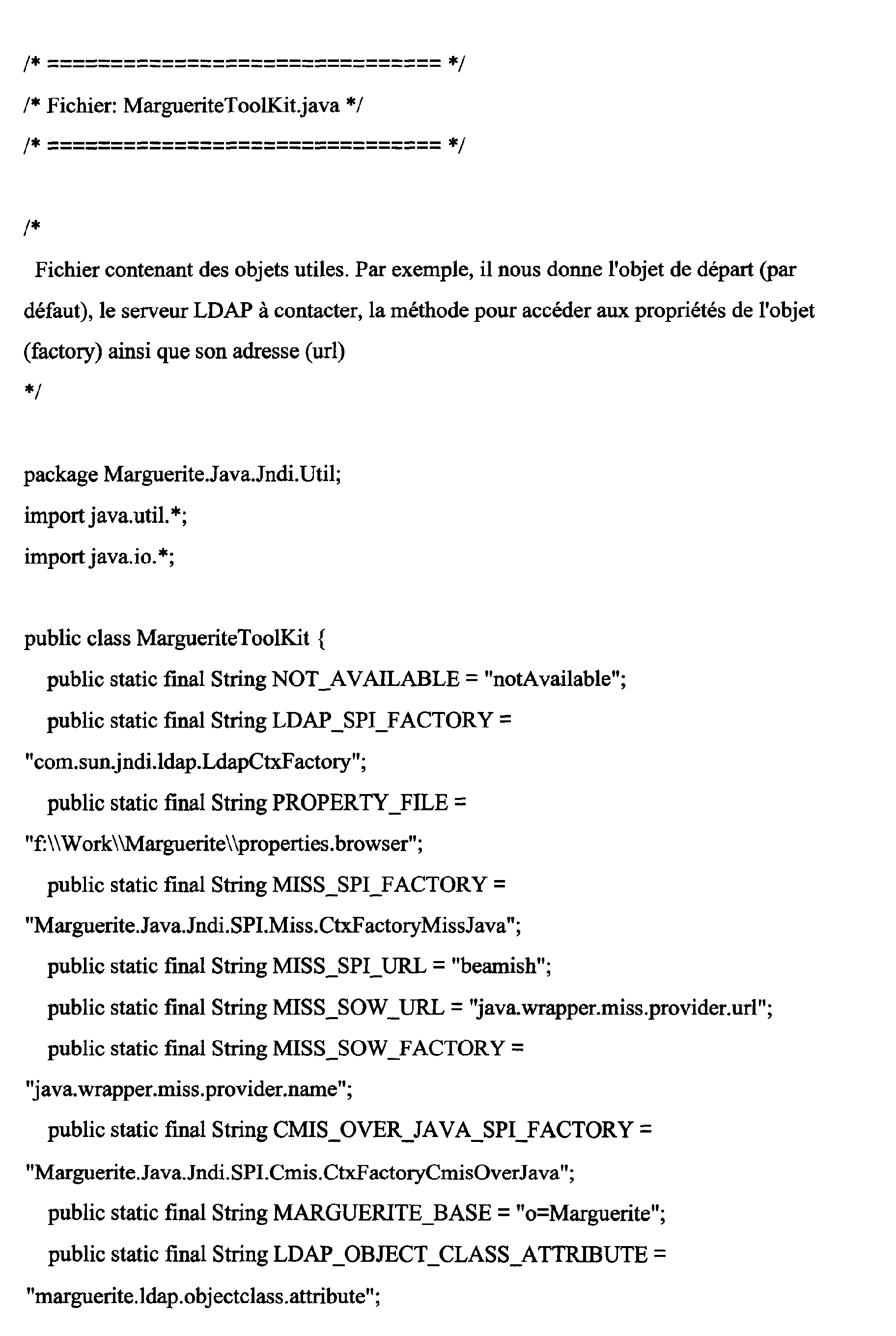

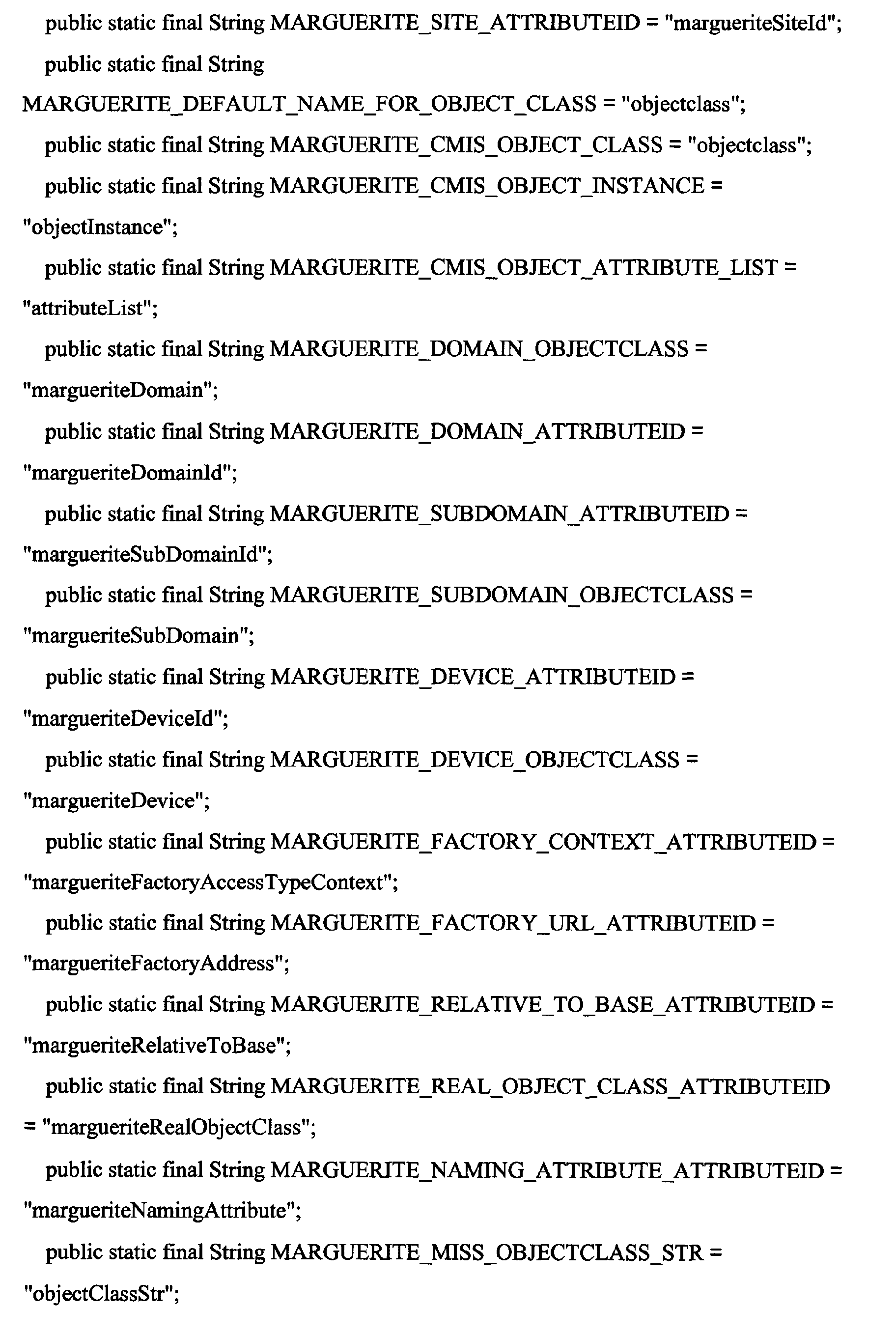

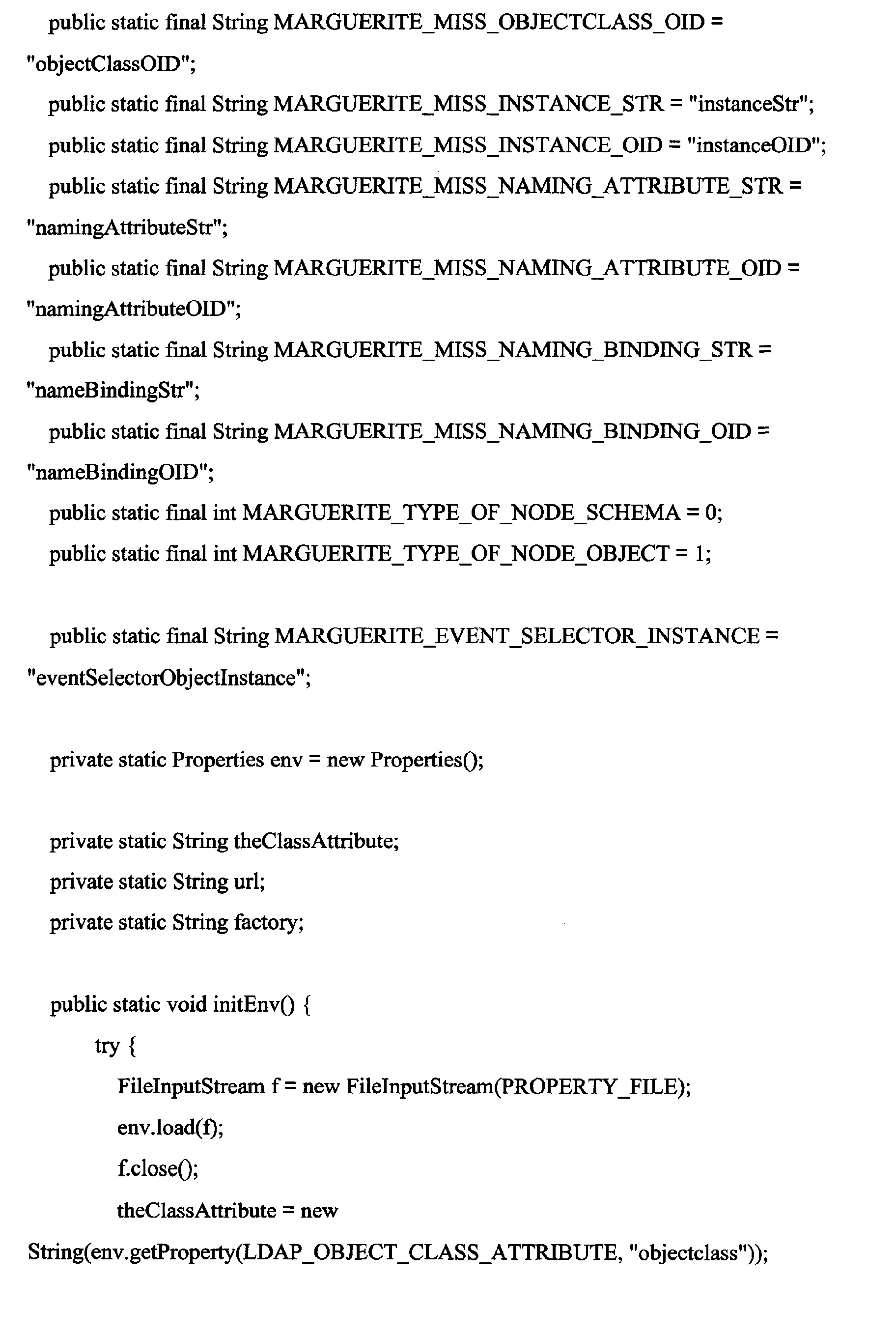

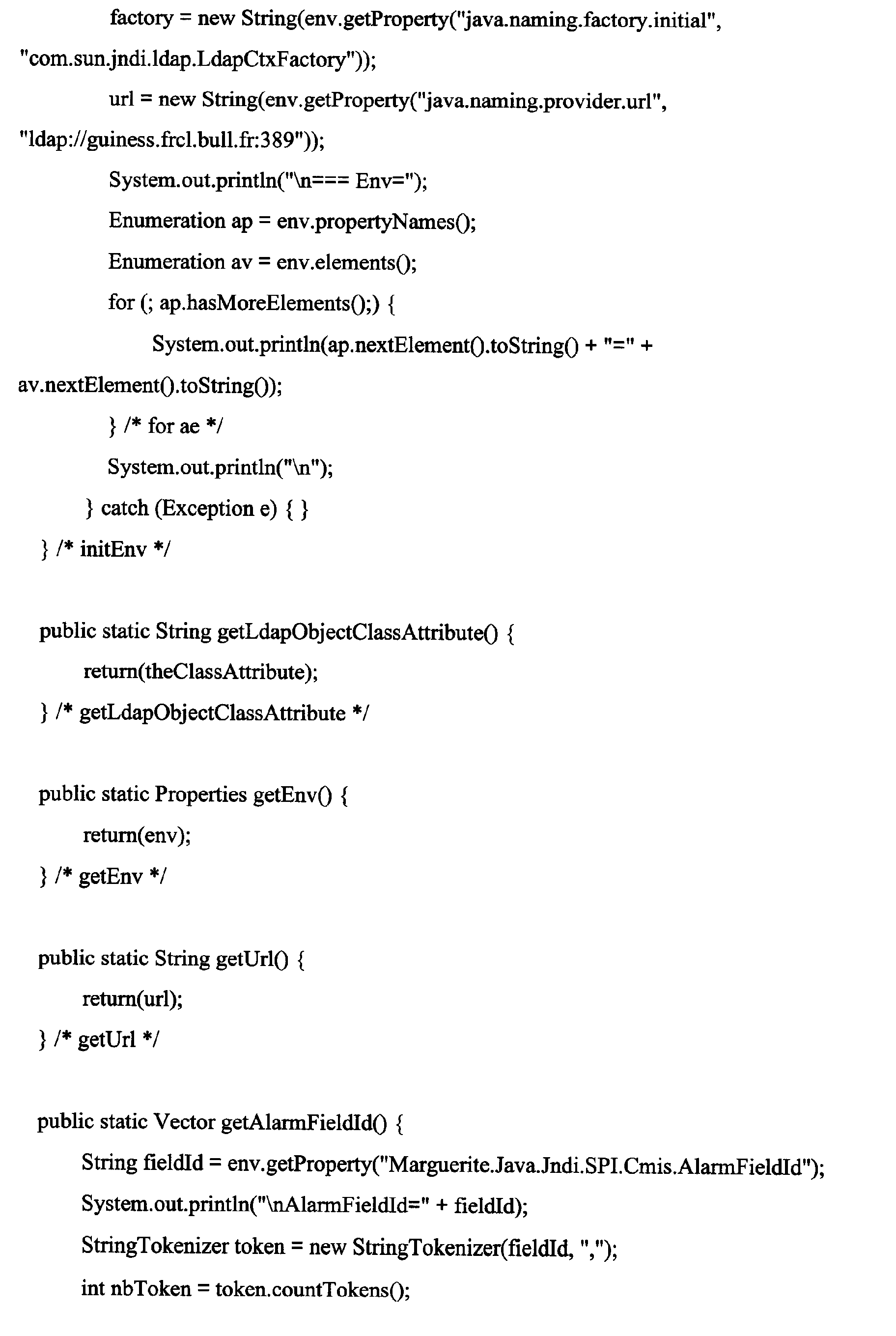

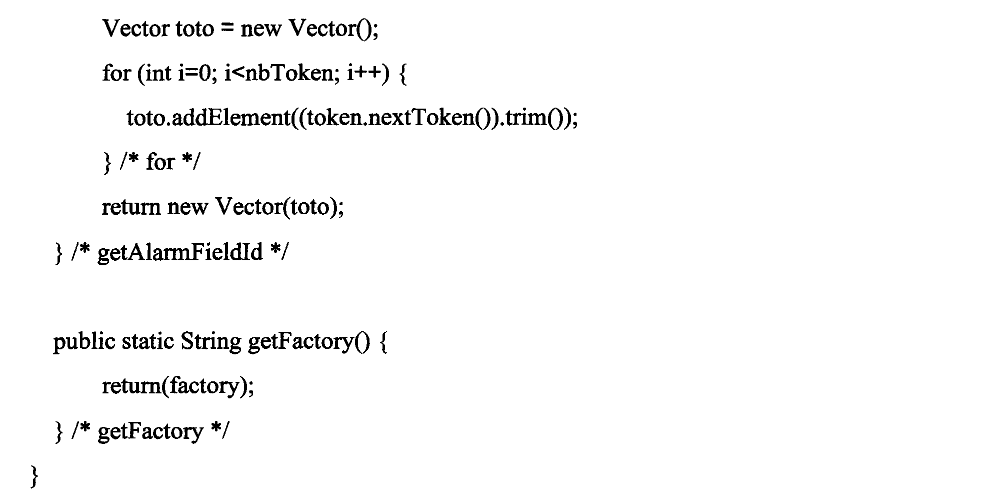

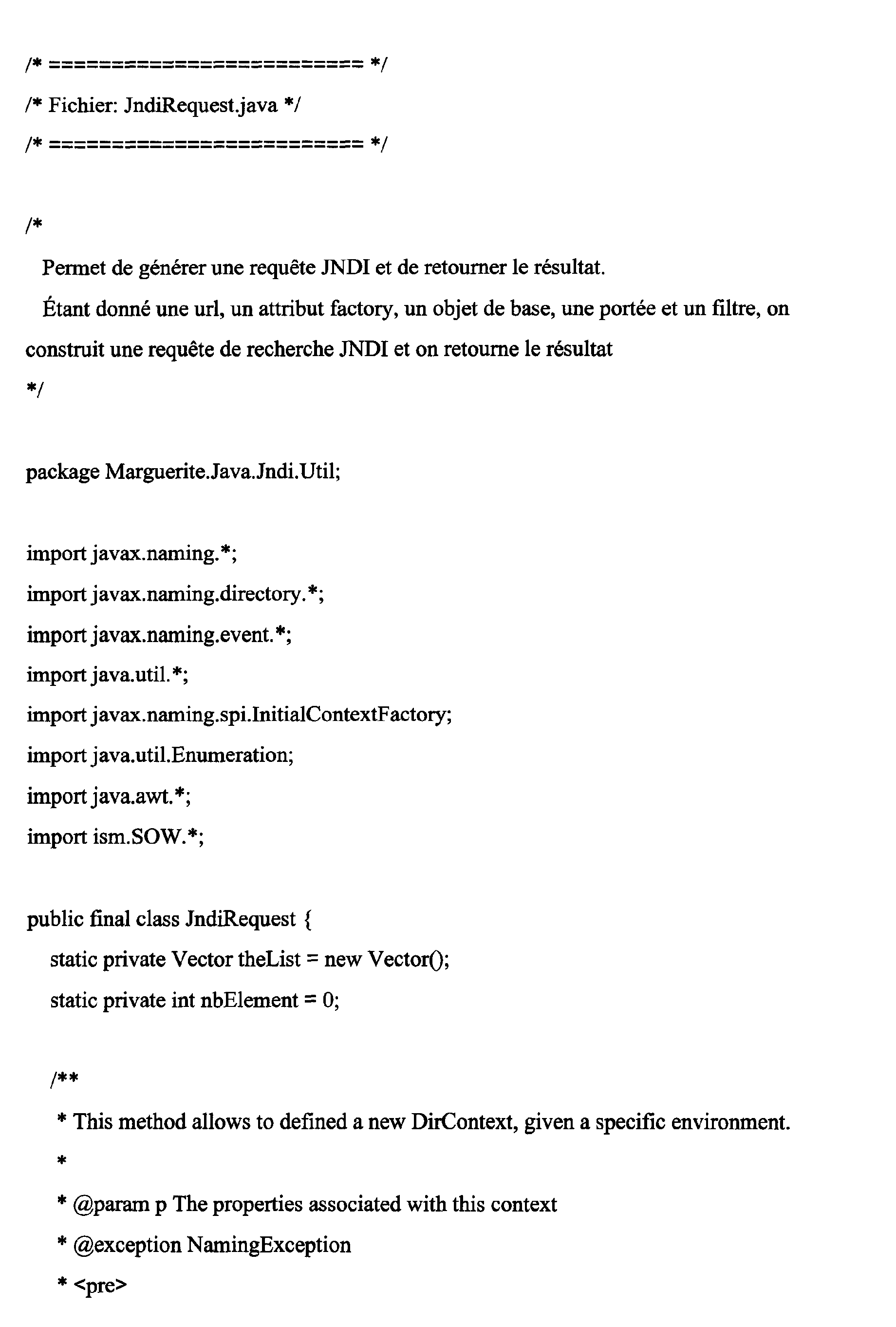

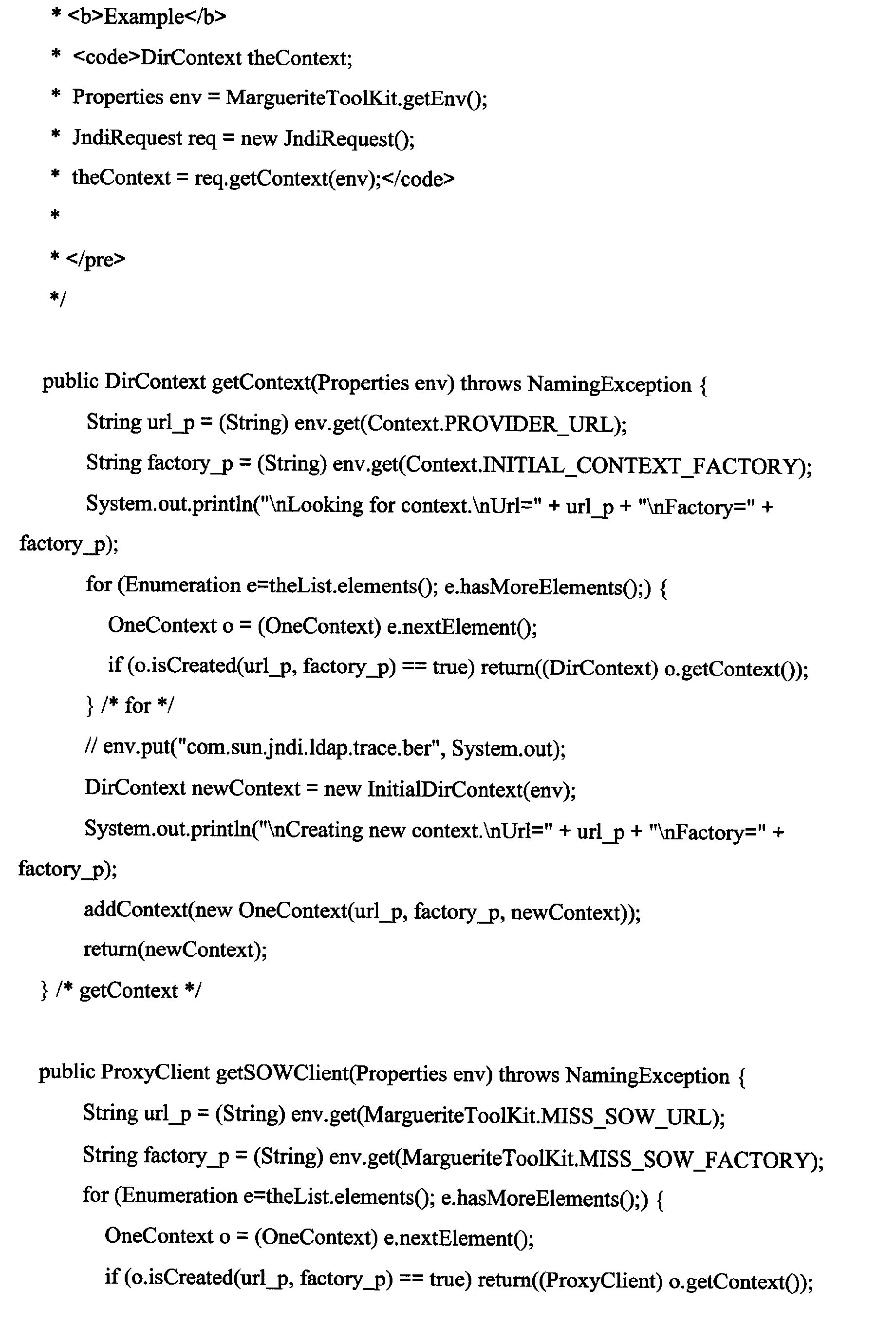

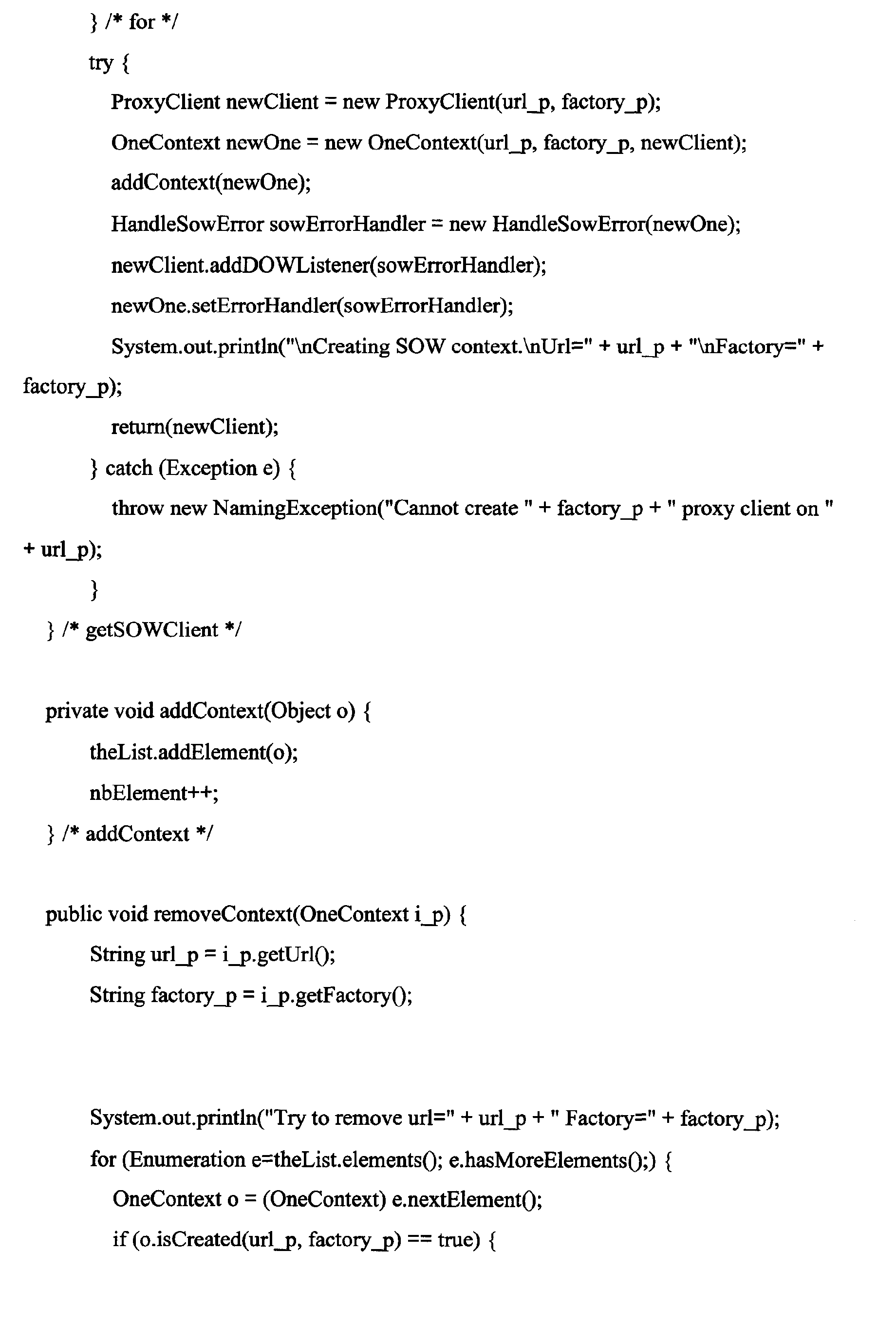

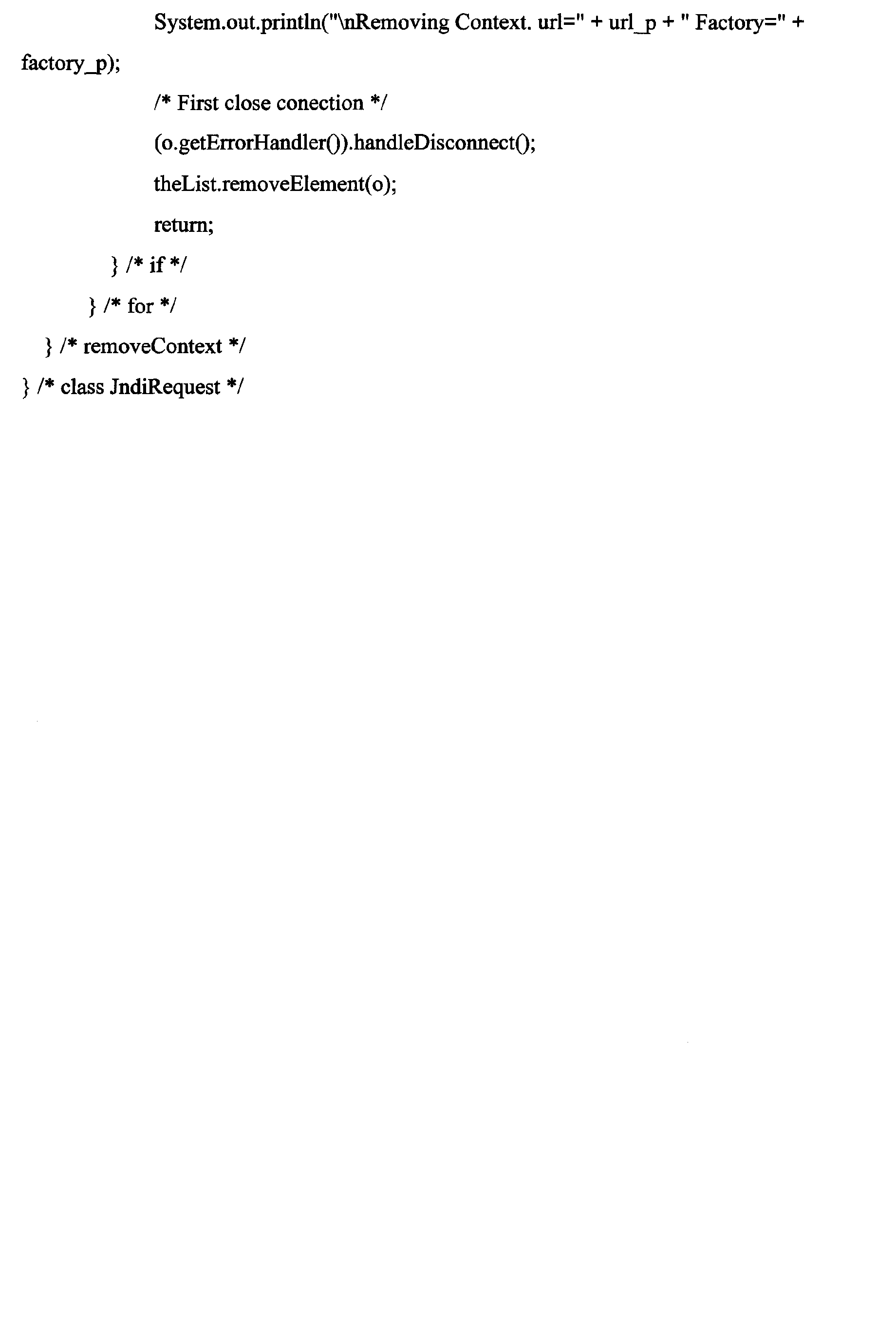

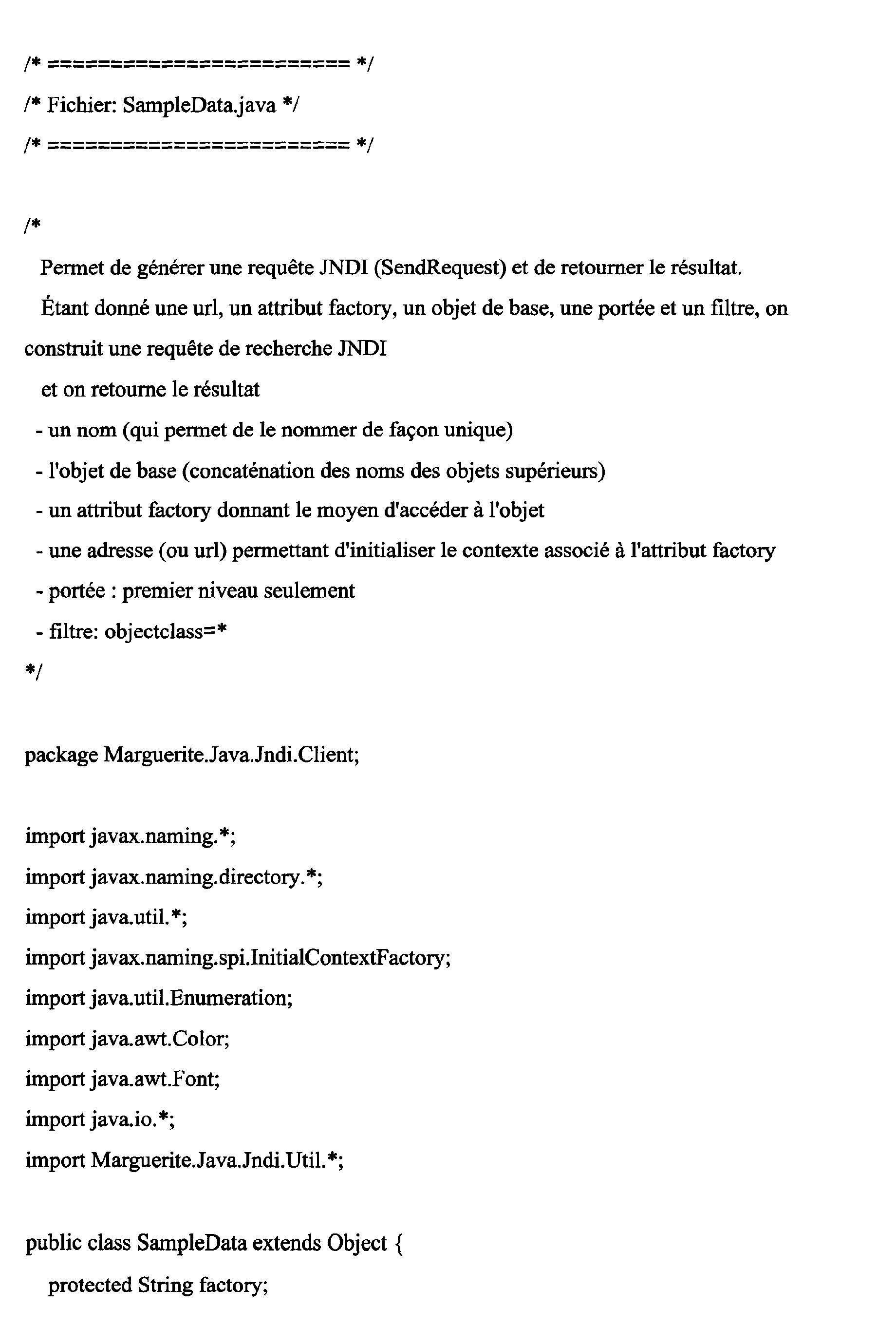

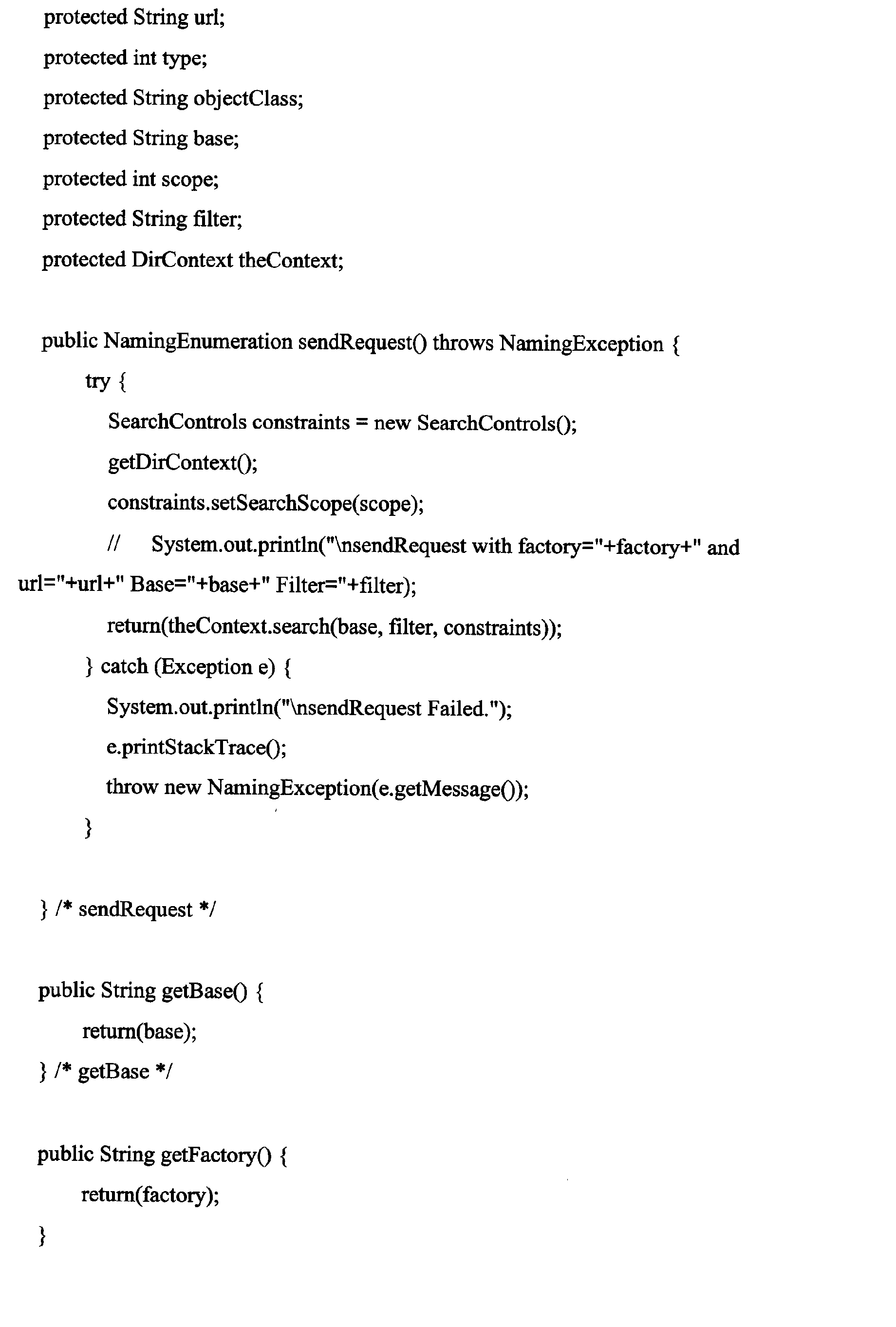

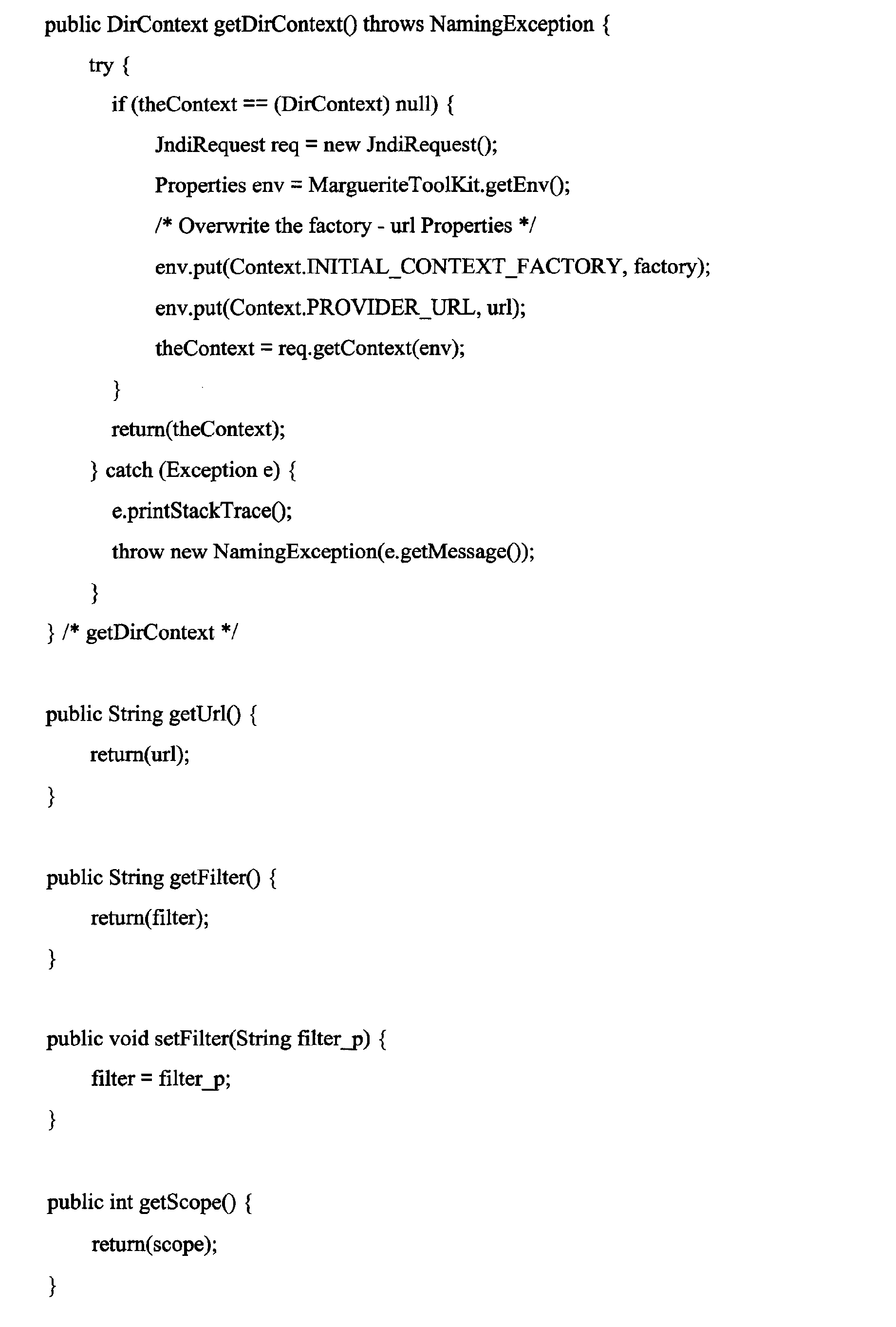

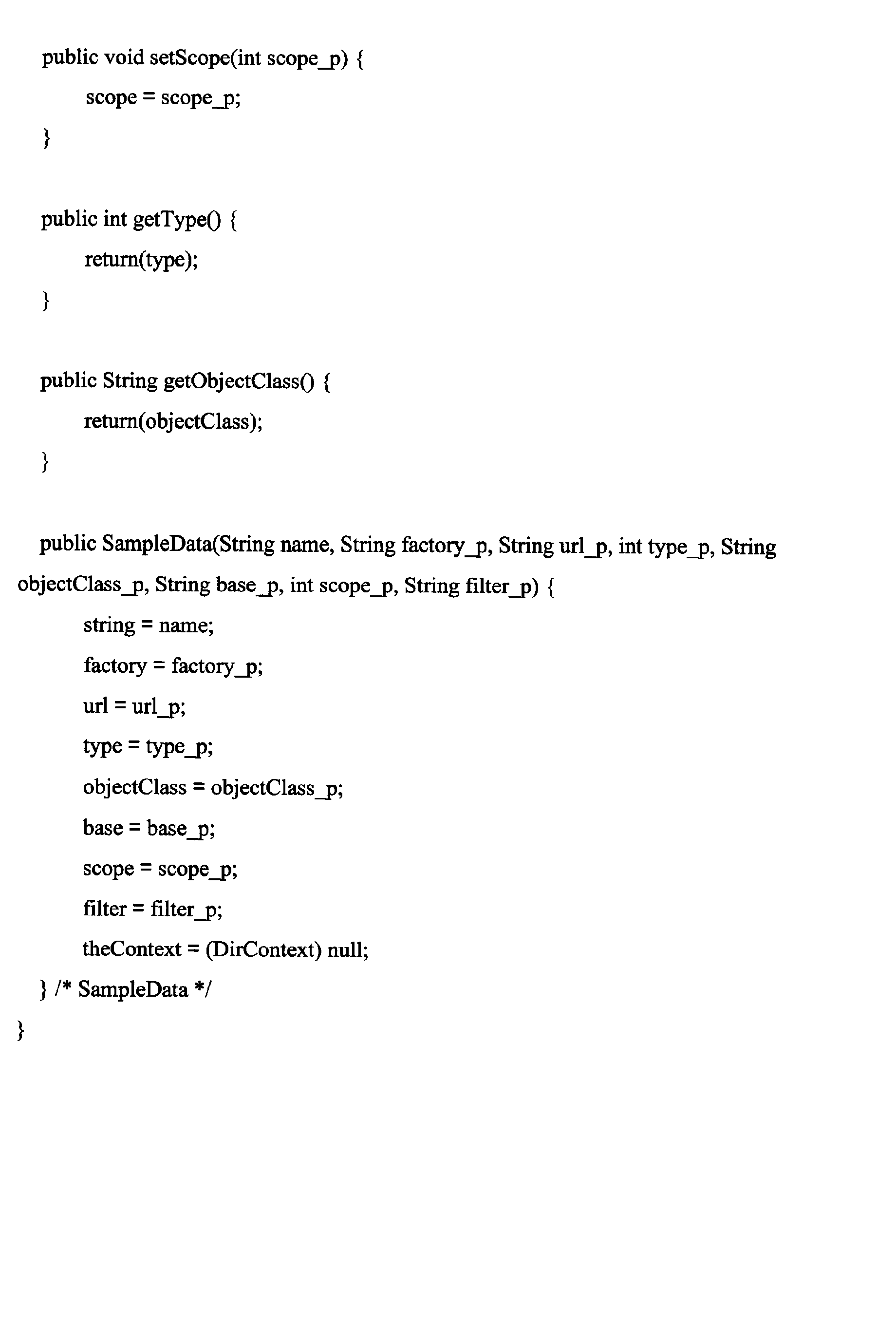

## Revendications

1. Procédé d'accès selon au moins deux protocoles (Pa, Pb, Pc) à des objets dans un arbre (80) représentatif d'au moins une ressource de système (11), le procédé utilisant des moyens d'interface (45) pour l'accès aux objets de l'arbre selon lesdits protocoles, caractérisé en ce qu'il comprend au moins un cycle comprenant les étapes de : faire une requête (87) désignant un objet cible (81) à accéder dans l'arbre et ayant une portée d'un seul niveau sous l'objet cible, utiliser un attribut protocolaire d'accès (factory) de l'objet cible (81) indiquant son protocole d'accès (Pc) pour permettre l'accès à l'objet cible par l'intermédiaire desdits moyens d'interface, et obtenir de la requête une réponse incluant au moins l'attribut de nommage de chaque objet (82, 83) contenu dans la portée de la requête et, si au moins un objet contenu dans la portée de la requête a un protocole d'accès différent de celui de l'objet cible, l'attribut protocolaire d'accès de cet objet.

2. Procédé selon la revendication 1, caractérisé en ce que l'attribut protocolaire d'accès est l'attribut constructeur (factory) du contexte (Cc) de l'objet cible (81).

3. Procédé selon la revendication 1 ou 2, caractérisé en ce que l'attribut protocolaire d'accès est le contexte (Cc) de l'objet cible, formé d'un attribut constructeur (factory) et d'un attribut de localisation (URL).

4. Procédé selon l'une des revendications 1 à 3, caractérisé en ce qu'il consiste à réitérer une ou plusieurs fois ledit cycle en prenant comme nouvel objet cible l'un des objets (82, 83) de la réponse à la requête (87) du cycle précédent.

5. Système d'administration (10) d'au moins une ressource de système (11) représentée par un arbre (80) d'objets (81-85) contenu dans une base (MIB) d'informations d'administration, le système d'administration incluant une application générique (42) pour l'administration de la ressource par l'intermédiaire de moyens d'interface (45) permettant l'accès aux objets de l'arbre selon au moins deux protocoles, caractérisé en ce que l'accès à des objets de l'arbre est fait selon le procédé défini par l'une des revendications 1 à 4.

6. Système selon la revendication 5, caractérisé en ce que les moyens d'interface (45) comprennent une interface (46) commune auxdits protocoles et attachée à des couches d'interface (47a-47c) adaptées respectivement à au moins lesdits deux protocoles.

7. Système selon la revendication 6, caractérisé en ce que l'interface commune (46) est une interface de répertoires de nommage en langage Java® (JNDI) et les couches d'interface (47a-47c) sont des couches protocolaires de service (SPI).

8. Système (11), tel qu'un système informatique, incluant au moins une ressource de système représentée sous forme d'un arbre (80) d'objets (81-85), caractérisé en ce que l'accès à des objets de l'arbre (80) est fait selon le procédé défini par l'une des revendications 1 à 4 ou à l'aide du système d'administration (10) défini par la revendication 5 à 7.

9. Programme d'ordinateur chargeable dans une mémoire interne (15) à un système informatique (11), caractérisé en ce qu'il comprend des parties de code pour la mise en oeuvre du procédé selon l'une des revendications 1 à 4.

10. Support d'enregistrement de programme d'ordinateur, caractérisé en ce qu'il comprend un programme lisible par une machine (12) d'un système informatique (11) et/ou dans un système d'administration (10) pour commander l'exécution du procédé selon l'une des revendications 1 à 4.
